# EUROPÄISCHE PATENTSCHRIFT

(11) **EP 1 530 523 B1**
(45) Veröffentlichungstag und Bekanntmachung des Hinweises auf die Patenterteilung: **10.10.2007**
(21) Anmeldenummer: 03753259.5
(22) Anmeldetag: 19.08.2003
(51) Int. Cl.: B60N 2/46, A47C 7/54

(54) **ARMLEHNE**
ARMREST
ACCOUDOIR

(30) Priorität: 19.08.2002 DE 10238619; 18.08.2003 DE 10338413
(43) Veröffentlichungstag der Anmeldung: 18.05.2005
(73) Patentinhaber: GRAMMER AG, 92224 Amberg (DE)
(72) Erfinder: HIMMELHUBER, Erwin, 92237 Sulzbach-Rosenberg (DE); ALBU, Alexander, 93073 Neutraubling (DE)
(74) Vertreter: Ostriga, Sonnet, Wirths & Roche
(86) Internationale Anmeldenummer: PCT/DE2003/002785
(87) Internationale Veröffentlichungsnummer: WO 2004/018253

(56) Entgegenhaltungen:
- EP-A- 1 164 051
- DE-U- 29 512 686
- US-A- 4 969 686

## Beschreibung

Die Erfindung betrifft eine Armlehne, wie Mittelarmlehne, entsprechend dem Oberbegriff des Anspruchs 1. Eine solche Armlehne für Kraftwagen ist in der EP 1 164 051 A1 beschrieben.

Bei der Armlehne gemäß der EP 1 164 051 A1 bilden Primärteil und Sekundärteil einander zugewandte, zu einer Achse (Zentralachse) koaxiale, etwa nach Art einer Stirnzahnkupplung angeordnete Stirnverzahnungen, wobei das am Armlehnenkörper befestigte Primärteil drehbar und zudem axial beweglich ist.

Die entsprechend der EP 1 164 051 A1 nach Art einer Hirth-Verzahnung wie bei einer Stirnzahnkupplung angeordneten, jedoch Gleit- und Sperrflanken aufweisenden Sperrzähne ermöglichen bei sehr kleiner Bauweise von Primär- und Sekundärteil eine Aufnahme großer Dreh- bzw. Lastmomente. Zugleich gestattet es die bekannte Armlehne mit Hilfe einer Steuereinrichtung zu bestimmen, bei welchem Schwenkwinkelbereich Primärteil und Sekundärteil miteinander in Eingriff gelangen sollen, um in dem ausgewählten Bereich einen Abwärtsschwenk des Armlehnenkörpers zu sperren.

Als Steuereinrichtung sieht die bekannte Armlehne zwei mit dem Primärteil umlaufende Steuernocken vor. Im einzelnen ist dazu zwischen dem Primärteil und dem Sekundärteil ein mit dem Primärteil drehverbundener Steuerring angeordnet, welcher in diametraler Anordnung die beiden radial abstehende Steuernocken aufweist. Der ein gesondertes Bauteil bildende bekannte Steuerring lässt sich entsprechend den individuellen Erfordernissen einer Steuerung besser gestalten als es z.B. bei einer mit dem Primärteil integrierten Bauform der Fall wäre.

Die Aufnahmefähigkeit großer Dreh- bzw. Lastmomente ist durch die Stirnverzahnungen von Primärteil und Sekundärteil entsprechend der EP 1 164 051 A1 dadurch optimiert worden, dass Primärteil und Sekundärteil jeweils eine die Stirnverzahnung tragende radiale Kreisringfläche bilden, welche dadurch besonders groß ausgelegt werden kann, dass die Außenkontur der Kreisringfläche zugleich die Außenkontur der Querschnittsfläche von Primärteil und/oder Sekundärteil bildet, wobei sich die Stirnverzahnung gleichflächig jeweils über den gesamten Umfang von Primärteil und Sekundärteil erstreckt. Um die Abwärtsbewegung des Armlehnenarms zu sperren, greifen also bei der bekannten Armlehne sämtliche Zähne, also eine Vielzahl von Zähnen, ineinander.

Die Abhängigkeit des Steuerringes von der Schwenkbewegung des Armlehnenkörpers wird bei der bekannten Anordnung für einen begrenzten Umfangswinkelbereich dadurch aufgehoben, dass das Primärteil in seiner Drehebene zwei zum Sekundärteil hin offene teilkreisförmige Mitnehmerschlitze aufweist, in die jeweils ein zum Primärteil weisender Mitnahmenocken des Steuerringes eingreift, der auch die beiden radial abstehenden Steuernocken bildet, welche mit der mit dem Sekundärelement festen Steuerbahn kooperieren. Hierbei weist jeder Mitnahmenocken des Steuerringes eine geringere Umfangserstreckung als der zugeordnete Mitnehmerschlitz des Primärteils auf. Durch die jeweils unterschiedliche Umfangserstreckung von Mitnehmerschlitzen (größere Erstreckung) und Mitnahmenocken (geringere Erstreckung) erhält das Primärteil sowohl bei abgesenkter Position und beginnendem Aufwärtsschwenk als auch bei angehobener Position und beginnendem Abwärtsschwenk des Armlehnenkörpers einen Vorlauf bis zum Anschlag des Mitnahmenockens an der jeweiligen ersten oder zweiten Anschlagfläche des betreffenden Mitnehmerschlitzes.

Entsprechend der EP 1 164 051 A1 drückt eine koaxial zum Sekundärteil und zum Primärteil angeordnete Druckfeder das an dem Armlehnenkörper befestigte Primärteil axial gegen das Sekundärteil. Die Axialbeweglichkeit des Primärteils ist durch ein auf der gemeinsamen Zentralachse befestigtes plattenartiges Widerlagerteil begrenzt. Dabei wirkt die Druckfeder über eine gesonderte Druckverteilplatte auf die der Stirnverzahnung abgewandten Außenseite des Primärteils, was eine raum- und bauaufwendige nachteilige Konstruktion zur Folge hat.

Bei der Armlehne gemäß der EP 1 164 051 A1 wird es außerdem als nachteilig empfunden, dass mit einer durch einen partiellen Aufwärtsschwenk bewirkten Höheneinstellung des an dem Armlehnenkörper befestigten und zudem axial beweglichen Primärteils auch eine oszillierende Axialverschiebung des Armlehnenkörpers einhergeht, die bei engen Einbauverhältnissen zu Behinderungen führen kann.

Um eine Beschädigung einer gattungsgemäßen Armlehne zu vermeiden, soll die maximal erträgliche Last ca. 80 daN nicht überschreiten. Zweckmäßig ist es deshalb, Sicherheitsreserven vorzusehen und die Armlehne mit einer Überlastsicherung auszustatten, welche bereits bei ca. 30 daN wirksam wird, also beispielsweise ein Zahnrichtgesperre außer Funktion setzt, so dass bei Auftreten dieser Grenzlast der Armlehnenkörper bis zu einem fahrzeugfesten Anschlag nach unten ausweichen kann. Eine Überlastsicherung allgemein ist beispielsweise bekannt von der DE 27 14 581 A1.

Ausgehend von der eingangs beschriebenen Armlehne gemäß der EP 1 164 051 A1, liegt der Erfindung die Aufgabe zugrunde, die bekannte Armlehne so weiterzuentwickeln, dass sie bei großer Belastbarkeit eine kompakte raumsparende Bauweise sowie einen funktionssicheren Betrieb ermöglicht.

Diese Aufgabe wird gemeinsam mit den Merkmalen des Oberbegriffs des Anspruchs 1 mit dessen kennzeichnenden Merkmalen gelöst.

Entsprechend der Erfindung ist das Primärteil auf der Achse axial fest und das Sekundärteil auf der Achse beweglich angeordnet. Da das Primärteil an dem Armlehnenkörper befestigt ist, bedeutet dieses, dass der Armlehnenkörper bei einer mit einem partiellen Aufwärtsschwenk erfolgenden Höheneinstellung keiner oszillierenden Axialverschiebung unterliegt, so dass die erfindungsgemäße Armlehne auch bei sehr engen Einbauverhältnissen behinderungsfrei bedient werden kann.

Auch ist entsprechend der Erfindung das Widerlagerteil auf der der Stirnverzahnung des Sekundärteils abgewandten Seite angeordnet, wobei zwischen dem Sekundärteil und dem Widerlagerteil die mindestens eine Druckfeder angeordnet ist. Durch diese Merkmale, nämlich durch eine direkte Federabstützung zwischen dem axial beweglichen Sekundärteil und dem axial festen Primärteil, vermeidet die Erfindung in vorteilhafter Weise die raum- und bauaufwendige Bauart gemäß der EP 1 164 051 A1, welche insbesondere einer Druckverteilplatte bedarf, die die Erfindung nicht benötigt.

Außerdem lässt sich der Steuerring in besonders raumsparender Weise in die zwischen Primärteil und Sekundärteil vorhandene Fuge hineinschachteln, indem entsprechend der Erfindung Primärteil und Sekundärteil im wesentlichen kreiszylindrische Ausnehmungen bilden, deren Öffnungen einander zugewandt sind und die gemeinsam den Steuerring aufnehmen.

Schließlich sieht die Erfindung vor, dass das dem Sekundärteil als Federwiderlager dienendes Widerlagerteil Bestandteil einer Überlastsicherung ist, welche einen Abwärtsschwenk des in seiner abgesenkten Position befindlichen Armlehnenkörpers freigibt.

Insbesondere ist an der dem Sekundärteil abgewandten Seite des Widerlagerteils ein sich mit einer Federrückstellkraft gegen das Widerlagerteil abstützendes Druckteil auf der Achse drehfest und axial verschieblich angeordnet, wobei das Widerlagerteil und das Druckteil jeweils zwei sich axial erstreckende und mit ihren freien Endbereichen gegeneinander gerichtete und ineinander greifende kupplungsklauenartige Vorsprünge aufweisen. Dabei liegen die kupplungsklauenartigen Vorsprünge des Widerlagerteils und des Druckteils bezüglich eines Aufwärtsschwenks des Armlehnenkörpers mit sich axial und radial erstreckenden Anschlagflächen und bezüglich eines Abwärtsschwenks des Armlehnenkörpers mit sich schräg zur Achse erstreckenden schrägen Gleitflächen aneinander.

Falls demnach auf den Armlehnenkörper eine abwärts gerichtete Grenzlast von z.B. etwa 30 daN einwirkt und als Drehmoment über das sich in Sperreingriff mit dem Primärteil befindliche Sekundärteil an das auf der Achse unverschiebliche Widerlagerteil weitergeleitet wird, drücken die schrägen Gleitflanken der kupplungsklauenartigen Vorsprünge des Widerlagerteils in Umfangsrichtung gegen die schrägen Gleitflächen der kupplungsklauenartigen Vorsprünge des Druckteils. Dies hat zur Folge, dass das Druckteil, welches axial verschieblich, jedoch drehfest auf der Achse angeordnet ist, entgegen der Federrückstellkraft, z.B. eines Tellerfederpakets, axial vom Widerlagerteil weggedrängt wird.

Dies geschieht in einem solchen Maße, dass die kupplungsklauenartigen Vorsprünge des Widerlagerteils mit ihren schrägen Gleitflächen vor den schrägen Gleitflächen der kupplungsklauenartigen Vorsprünge des Druckteils hinweggleiten können und dabei das Druckteil axial wegdrängen, während das Sekundärteil auf solche Weise eine Ausweichdrehung ausführt.

In weiterer Ausgestaltung der Erfindung weist bei einer abgewandelten Ausführungsform die Achse auf gesamter axialer Länge ein Keilwellenprofil auf, wobei auf der Achse das Primärteil, ein Steuerring, das Sekundärteil und das Widerlagerteil mit jeweils einer glatten zentralen Durchgangsbohrung drehbar gelagert sind, während zumindest ein Druckteil mittels einer entsprechend dem Keilwellenprofil profilierten zentralen Aufnahme drehfest auf der Achse angeordnet ist.

Unter Vermeidung eines relativ aufwendigen Formdrehteils für die zentrale Achse, kann entsprechend der vorliegenden Erfindung ein Keilwellenprofil zur Anwendung gelangen, dessen Querschnitt auf gesamter axialer Länge derselbe ist. Derartige Keilwellenprofile sind gewissermaßen als Meterware erhältlich. Ein solches Keilwellenprofil bietet zugleich den Vorteil, dass das Primärteil, der Steuerring, das Sekundärteil und das Widerlagerteil jeweils mit einer glatten zentralen Durchgangsbohrung auf dem Keilwellenprofil drehbar gelagert sind. Falls hingegen eine drehfeste Verbindung zur Achse erwünscht ist, wie z.B. bei einem im folgenden noch näher zu beschreibenden Druckteil, kann dieses mittels einer entsprechend dem Keilwellenprofil profilierten zentralen Aufnahme des Druckteils durchgeführt werden.

Das Keilwellenprofil gestattet im Bedarfsfall auch eine Axialverschiebung auf der Achse, und zwar sowohl der mit einer glatten Durchgangsbohrung versehenen Elemente als auch des zumindest einen mit einer dem Keilwellenprofil entsprechenden Aufnahme versehenen Elements, nämlich des Druckteils. Für den Fall, dass eines der vorgenannten Elemente, sei es ein mit einer glatten zentralen Durchgangsbohrung versehenes Element oder sei es ein mit einer entsprechend dem Keilwellenprofil profilierten zentralen Aufnahme versehenes Element auf der Achse unverschieblich festgelegt werden soll, sieht die Erfindung vor, dass die Achse mindestens eine an ihrem Außenumfang angeordnete Aufnahme, wie z.B. eine Ringnut zur Halterung eines axialen Sicherungselements, wie z.B. eines Seegerringes, aufweist.

Ein weiterer wesentlicher Vorteil der vorliegenden Erfindung verbindet sich mit den Merkmalen, wonach in Aufwärtsschwenkrichtung jedes Steuernockens, der jeweiligen Steueraussparung folgend, aus der ebenen Steuerbahn in Axialrichtung zum Steuerring hin eine Erhebung als Schaltschwelle vorragt, gegen welche der Steuernocken bei seiner Drehung in Abwärtsschwenkrichtung anläuft.

Die Schaltschwelle stellt sicher, dass beim Abwärtsschwenk der Armlehne, zugleich also auch beim Abwärtsschwenk des mit der Armlehne bewegungseinheitlichen Primärteils, der Steuernocken des Steuerringes durch Anlaufen gegen die Schaltschwelle zeitweise gehemmt wird. Auf diese Art wird sichergestellt, dass sich der Mitnehmernocken des Primärteils innerhalb der Mitnahmeaussparung relativ zum Steuerring drehen kann, um den für die spätere Einstellbewegung beim Anheben der Armlehne erforderlichen Vorlauf von z.B. 15° Umfangswinkel aufzubauen.

Besonders vorteilhaft wirken sich die letztgenannten Erfindungsmerkmale aus, wenn in zusätzlicher Ausgestaltung der Erfindung die Schaltschwelle unmittelbar neben der ihr zugeordneten Steueraussparung angeordnet ist. Dies bedeutet, dass der Steuernocken des Steuerringes nach anfänglichem Anheben der Armlehne über einen Umfangswinkel von etwa 15° nur gerade die Schaltschwelle überwinden muss, damit bei einem unmittelbar anschließend folgenden Abwärtshub der Vorlauf über die Umfangswinkeldifferenz von etwa 15° wieder aufgebaut ist.

Zusätzliche Erfindungsmerkmale sind den Unteransprüchen zu entnehmen.

In den Zeichnungen sind bevorzugte Ausführungsbeispiele entsprechend einer ersten Ausführungsform (Fig. 1-10C) und entsprechend einer zweiten Ausführungsform (Fig. 11-17A) dargestellt, es zeigt,
Fig. 1 eine räumliche Darstellung des mechanischen Bereichs einer Armlehne,
Fig. 2 in Anlehnung an Fig. 1 den mechanischen Bereich ohne ein die inneren Bauteile des mechanischen Bereichs verkleidendes Hüllrohr,
Fig. 3 und 4 in Anlehnung an die Darstellung gemäß Fig. 2 eine auseinandergezogene räumliche Darstellung mit einem schematisch dargestellten Armauflageteil unter zwei unterschiedlichen Blickwinkeln,
Fig. 5 in Anlehnung an die Darstellung gemäß Fig. 3 eine um etwa 180° gewendete Darstellung,
Fig. 6 die Seitenansicht eines Primärteils in einer durch die Fig. 2 und 3 vorgegebenen Einbaulage,
Fig. 6A die Stirnansicht des Primärteils gemäß dem in Fig. 6 mit VIA bezeichneten Ansichtspfeil,
Fig. 6B einen Radialschnitt entsprechend der in Fig. 6A mit VIB-VIB bezeichneten Schnittlinie,
Fig. 7 eine Stirnansicht eines Steuerringes,
Fig. 7A einen Radialschnitt entsprechend der in Fig. 7 mit VIIA-VIIA bezeichneten Schnittlinie, wobei Fig. 7A der Einbaulage gemäß Fig. 3 entspricht,
Fig. 7B eine Seitenansicht des Steuerringes in einer gegenüber der Einbaulage gemäß Fig. 7A um 180° gewendeten Darstellung,
Fig. 7C eine Stirnansicht entsprechend dem mit VIIC bezeichneten Ansichtspfeil in Fig. 7B,
Fig. 8 eine Seitenansicht eines Sekundärteils in der Einbaulage gemäß Fig. 3,
Fig. 8A eine Stirnansicht entsprechend dem in Fig. 8 mit VIIIA bezeichneten Ansichtspfeil,
Fig. 8B ein Radialschnitt entsprechend der in Fig. 8A mit VIIIB-VIIIB bezeichneten Schnittlinie,
Fig. 8C einen im Vergleich zu Fig. 8B um 90° gedrehten Radialschnitt gemäß der Schnittlinie VIIIC-VIIIC in Fig. 8A,
Fig. 8D eine Stirnansicht entsprechend dem in Fig. 8 mit VIIID bezeichneten Ansichtspfeil,
Fig. 9 eine Seitenansicht eines Widerlagerteils entsprechend der Einbaulage gemäß Fig. 3,
Fig. 9A eine Stirnansicht entsprechend dem in Fig. 9 mit IX bezeichneten Ansichtspfeil,
Fig. 9B eine Stirnansicht entsprechend dem in Fig. 9 mit IXB bezeichneten Ansichtspfeil,
Fig. 9C einen Radialschnitt entsprechend der in Fig. 9B mit IXC-IXC bezeichneten Schnittlinie,
Fig. 9D einen gegenüber Fig. 9C um 90° gedrehten Radialschnitt entsprechend der in Fig. 9B mit IXD-IXD bezeichneten Schnittlinie,
Fig. 10 eine Stirnansicht auf ein Druckteil, ansonsten auch entsprechend dem in Fig. 10B mit X bezeichneten Ansichtspfeil,
Fig. 10A einen Radialschnitt entsprechend der in Fig. 10 mit XA-XA bezeichneten Schnittlinie,
Fig. 10B eine Seitenansicht entsprechend dem in Fig. 10 mit XB bezeichneten Ansichtspfeil,
Fig. 10C eine Stirnansicht entsprechend dem in Fig. 10B mit XC bezeichneten Ansichtspfeil,
Fig. 11 eine räumliche Darstellung des mechanischen Bereichs einer Armlehne als abgewandelter Bauform,
Fig. 12 in Anlehnung an Fig. 11 den mechanischen Bereich ohne ein die inneren Bauteile des mechanischen Bereichs verkleidendes Hüllrohr,
Fig. 13 in Anlehnung an Fig. 12 eine auseinandergezogene räumliche Darstellung mit einem schematisch dargestellten Armauflageteil,
Fig. 14 die Seitenansicht des Primärteils in einer durch die Fig. 12 und 13 vorgegebenen Einbaulage,
Fig. 14A die Stirnansicht des Primärteils gemäß dem in Fig. 14 mit XIVA bezeichneten Ansichtspfeil,
Fig. 14B einen Radialschnitt entsprechend der in Fig. 14A mit Fig. XIVB-XIVB bezeichneten Schnittlinie,
Fig. 15 eine Stirnansicht des Steuerringes,
Fig. 15A einen Radialschnitt entsprechend der in Fig. 15 mit XVA-XVA bezeichneten Schnittlinie, wobei Fig. 15A der Einbaulage gemäß den Fig. 12 und 13 entspricht,
Fig. 15B eine Seitenansicht des Steuerringes in einer gegenüber der Einbaulage gemäß Fig. 15A um 180° gewendeten Darstellung,
Fig. 15C eine Stirnansicht entsprechend dem mit XVC bezeichneten Ansichtspfeil in Fig. 7B,
Fig. 16 eine Seitenansicht des Sekundärteils in der Einbaulage gemäß den Fig. 12 und 13,
Fig. 16A eine Stirnansicht entsprechend dem in Fig. 16 mit XVIA bezeichneten Ansichtspfeil,
Fig. 16B ein Radialschnitt entsprechend der in Fig. 16A mit XVIB-XVIB bezeichneten Schnittlinie,
Fig. 16C einen im Vergleich Fig. 16B um 90° gedrehten Radialschnitt gemäß der Schnittlinie XVIC-XVIC in Fig. 16A,
Fig. 16D eine Stirnansicht entsprechend dem in Fig. 16 mit XVID bezeichneten Ansichtspfeil,
Fig. 17 eine Stirnansicht entsprechend dem in Fig. 17A mit XVII bezeichneten Ansichtspfeil und
Fig. 17A einen Radialschnitt entsprechend der in Fig. 17 mit XVIIA-XVIIA bezeichneten Schnittlinie.

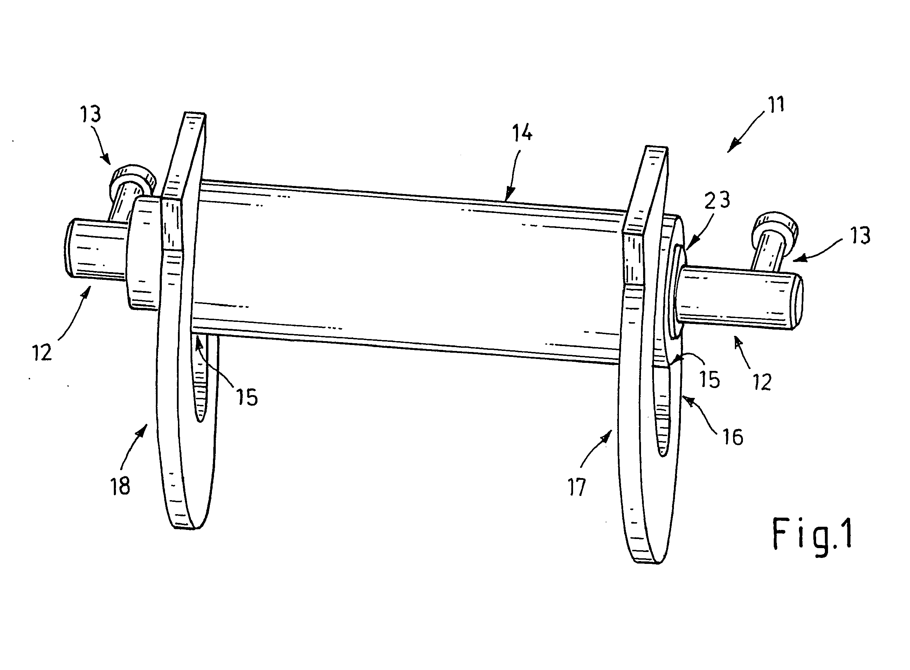

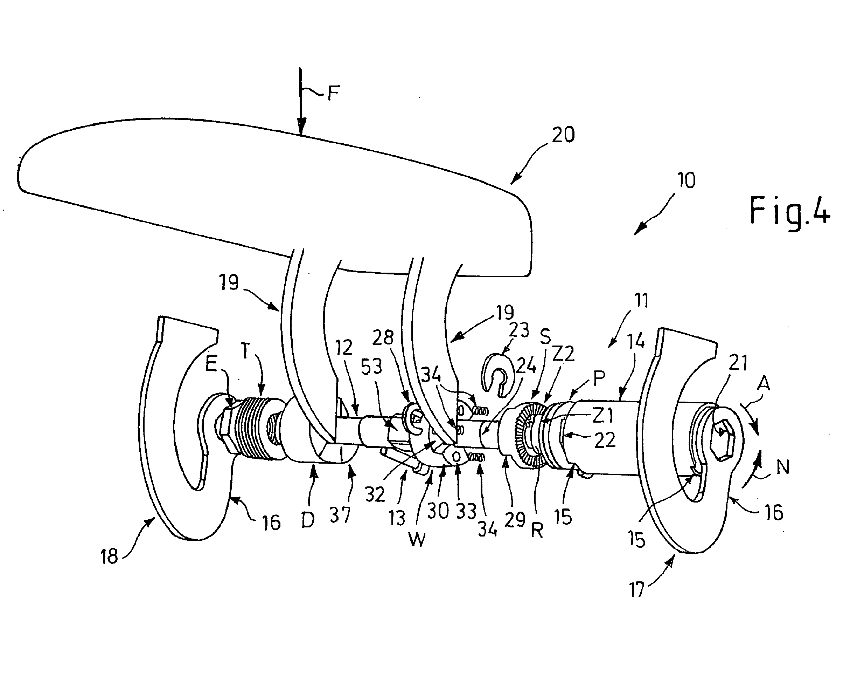

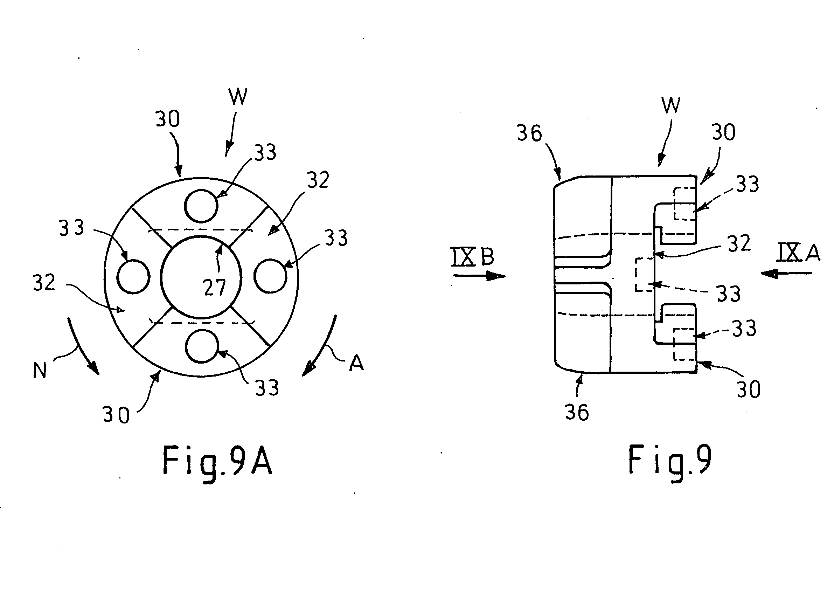

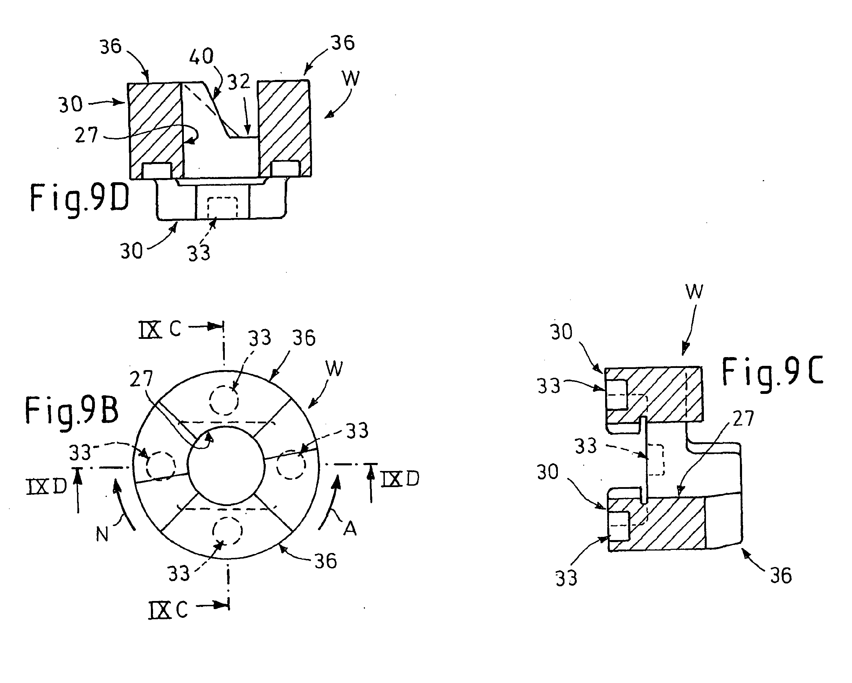

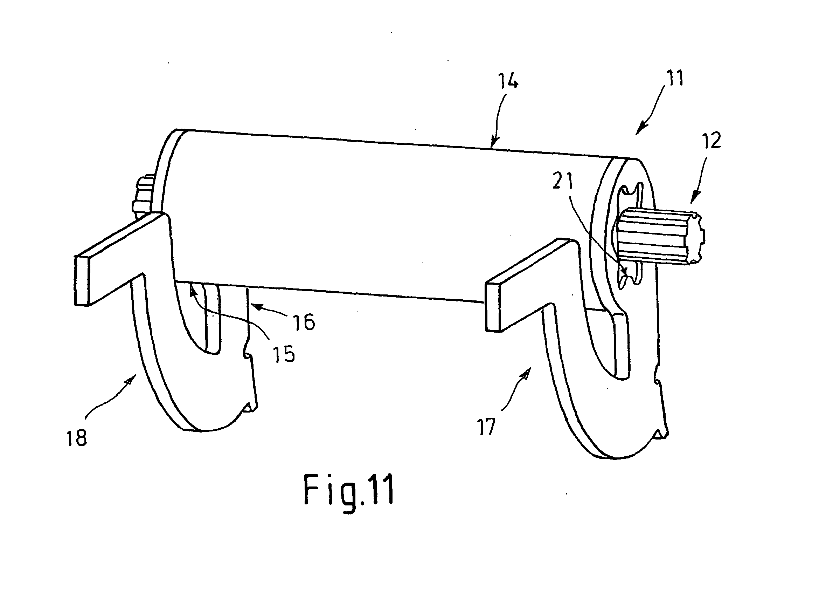

In der folgenden Zeichnungsbeschreibung sind sowohl bei dem Ausführungsbeispiel gemäß den Fig. 1-10C als auch bei dem Ausführungsbeispiel gemäß den Fig. 11-17A trotz baulicher Unterschiede analoge Bauelemente stets mit denselben Bezugsziffern bezeichnet.

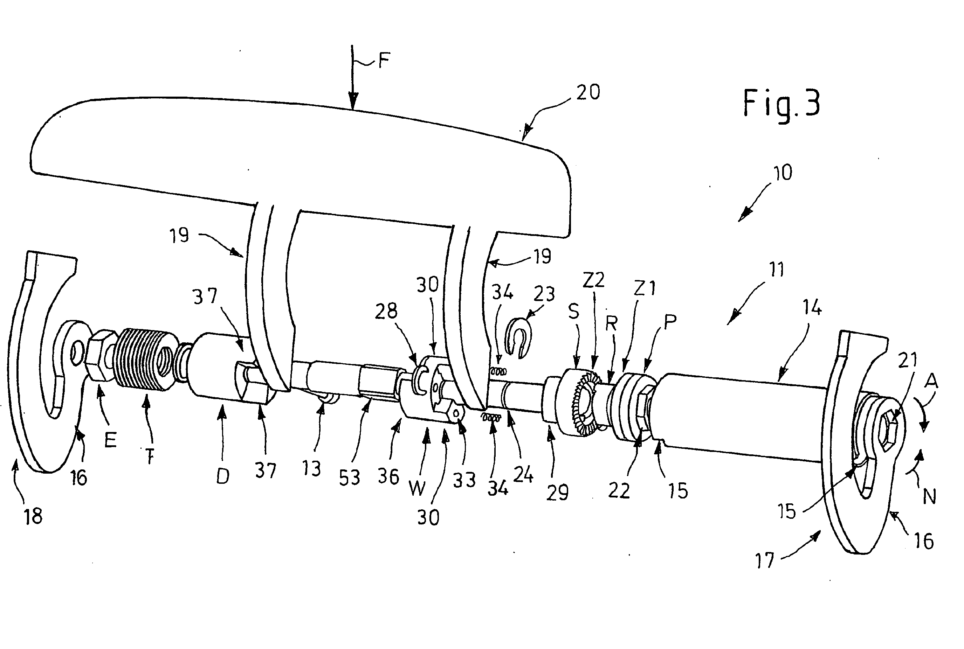

Die Gesamtheit einer Armlehne (s. Fig. 3 bis 5, Fig. 13) ist mit der Bezugsziffer 10 versehen.

Das tragende Element des mechanischen Bereichs 11 der Armlehne 10 ist eine raumfeste Achse 12, welche mittels Halter 13 in nicht näher beschriebener Weise fahrzeugseitig befestigt ist. Die Achse 12 hat bei der Ausführungsform gemäß den Fig. 11-17A ein Keilwellenprofil, d.h. ein sogenanntes Vielkeilwellenprofil.

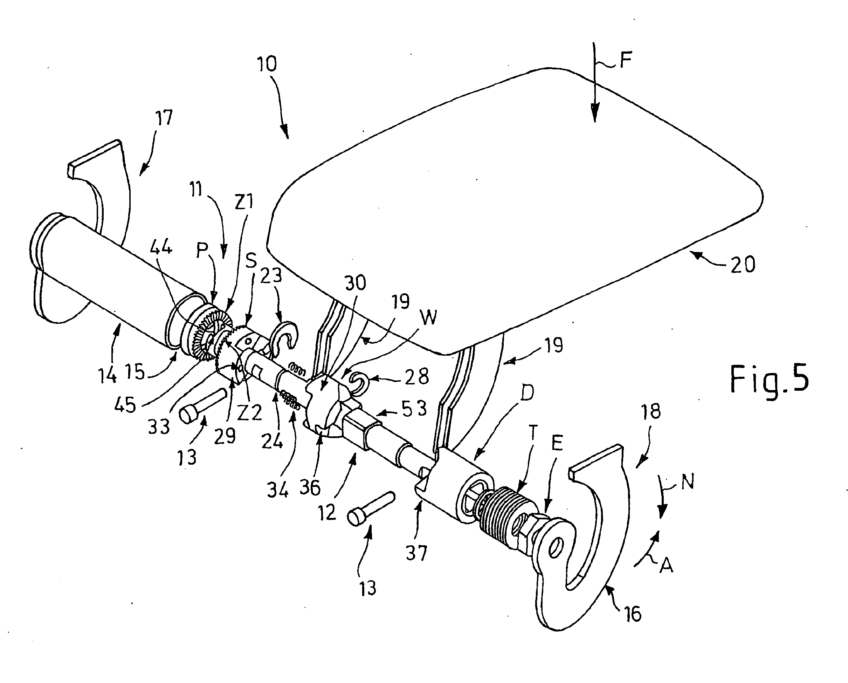

Eine Vielzahl der Bauteile des mechanischen Bereichs 11 ist von einem Hüllrohr 14 umgeben, welches beidendig mit je einer Ausklinkung 15 jeweils den geraden Bereich 16 der beiden etwa haarnadelförmig gekrümmten Armlehnentragarme 17, 18 formschlüssig übergreift. Auf diese Weise ist der in den Fig. 1-4 sowie Fig. 11 und 13 rechts bzw. der in Fig. 5 links dargestellte Tragarm 17 mit dem in den Fig. 1-4 sowie Fig. 11 und 13 links dargestellten bzw. mit dem in Fig. 5 rechts dargestellten Tragarm 18 zwangsweise drehverbunden.

Zwei im Querschnitt etwa U-förmige Hohlprofile 19, die von einer Armauflage 20 herabragen, werden in nicht dargestellter Weise über die beiden Tragarme 17, 18 geschoben und dort befestigt.

Da die auf die Armauflage 20 einwirkenden äußeren Kräfte F primär über den Tragarm 17 in den mechanischen Bereich 11 eingeleitet werden, steht der Tragarm 17 im folgenden stellvertretend zugleich für den Begriff "Armlehnenkörper" bzw. "schwenkbarer Armlehnenkörper".

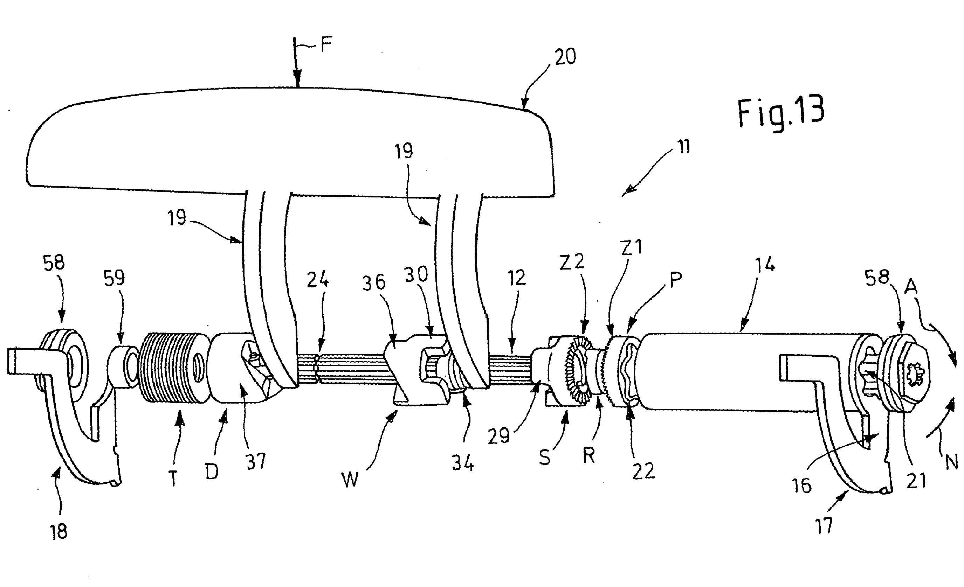

Wie insbesondere anhand von Fig. 3 vorstellbar ist, übergreift ein Innensechskant 21 des Tragarms 17 einen Außensechskant 22, der mit einem Primärteil P einstückig ist. Entsprechend den Fig. 11 und 13 ist anstelle des Innensechskants eine torxschraubenartige Aufnahme 21 und anstelle des Außensechskants ein torxschlüsselartiger Bund 22 am Primärteil P vorgesehen. Auch ist auf beiden Enden der Achse 12 je ein Abschlussteil 58 drehfest gehalten. Der Tragarm 18 ist mittels einer Buchse 59 auf der Achse 12 drehgelagert.

Das Primärteil P ist, ebenso wie ein Steuerring R, ein Sekundärteil S, ein Widerlagerteil W, ein Druckteil D, ein Tellerfederpaket T und eine Einstellmutter E, auf der Achse 12 koaxial zu dieser angeordnet. Die Einstellmutter E bzw. ein gleichwirkendes Bauteil ist in den Fig. 11-13 nicht gezeigt.

Zur Axialsicherung des Tragarms 17 befindet sich an dessen Außenseite ein Seegerring 23, welcher in einer Ringnut 24 der Achse 12 schnappverrastend gehalten ist.

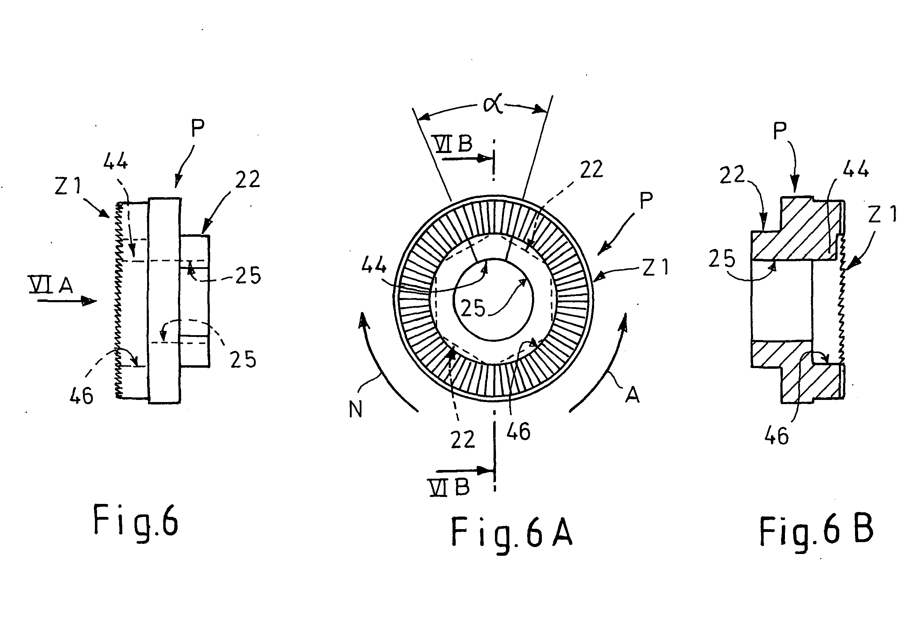

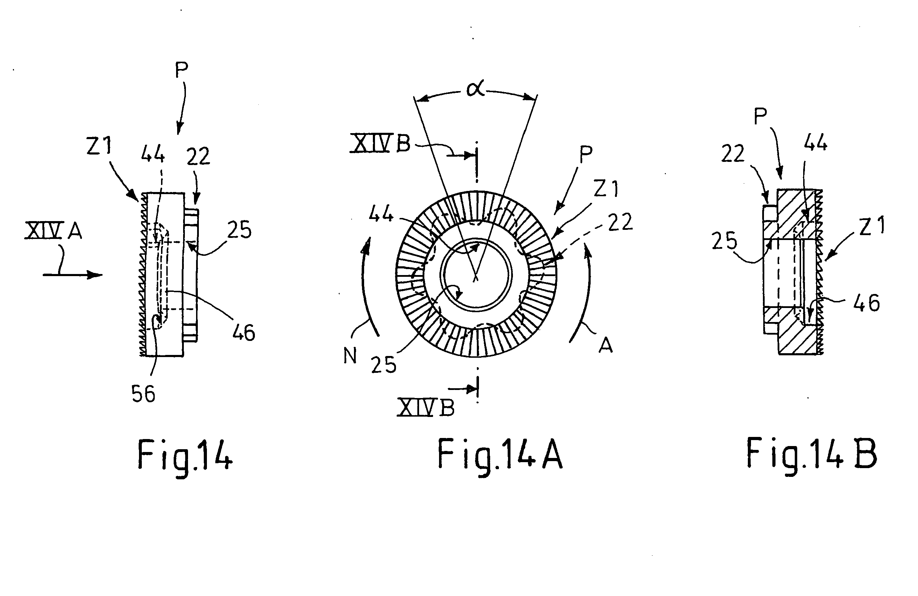

Das Primärteil P ist in den Fig. 6-6B sowie Fig. 14-14B näher dargestellt. Die Darstellung des Primärteils P gemäß den Fig. 6 und 14 entspricht dessen Einbaulage in den Fig. 3 sowie Fig. 12 und 13. Das Primärteil P weist eine Stirnverzahnung Z1 auf, welche der Hirth-Verzahnung einer Stirnzahnkupplung ähnelt, deren Zähne jedoch entsprechend einem Zahnrichtgesperre Sperrzähne mit je einer Gleitflanke und mit je einer steilen bzw. hinterschnittenen Sperrflanke bilden. Die Stirnverzahnung Z1 erstreckt sich ganzflächig über eine Kreisringfläche, deren Peripherie praktisch mit der Außenkontur des Primärteils P identisch ist, so dass die Stirnverzahnung Z1 bereits wegen dieser geometrischen Anordnung eine hinreichende Tragfähigkeit, und damit eine hinreichende Eignung, relativ große Dreh- bzw. Lastmomente aufzunehmen, besitzt.

Mit der Stirnverzahnung Z1 des Primärbauteils P wirkt eine eine analoge Verzahnungsgeometrie aufweisende Stirnverzahnung Z2 des Sekundärteils S zusammen.

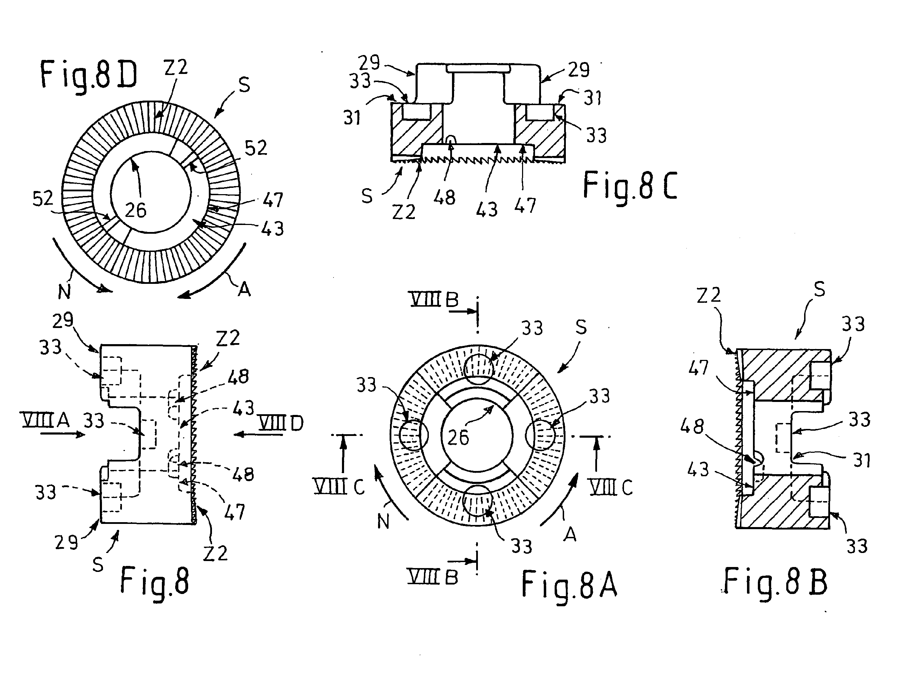

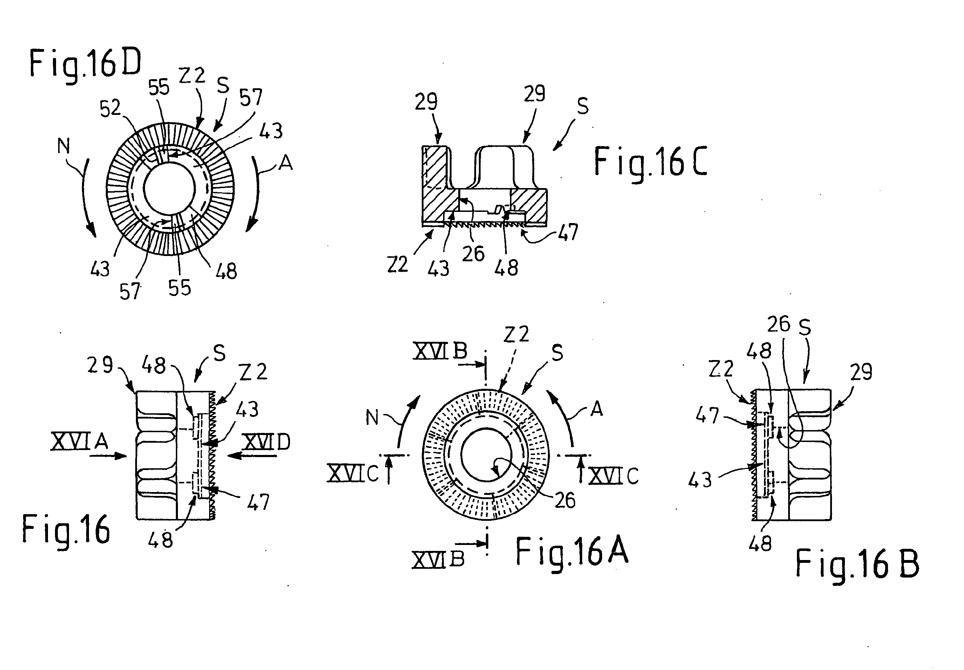

Die Fig. 8 und 16 zeigen das Sekundärteil S in seiner der Fig. 3 sowie den Fig. 12 und 13 entsprechenden Einbaulage. Die Stirnverzahnung Z2 des Sekundärteils S ist gegenüber der Stirnverzahnung Z1 des Primärteils P so beschaffen und so angeordnet, dass bei einem Aufwärtsschwenk des Tragarms 17 entsprechend dem Schwenkpfeil A (s. Fig. 3 und 13) die Sperrzähne der Stirnverzahnung Z1 des Primärteils P über die Gleitflanken der Sperrzähne der Stirnverzahnung Z2 des im normalen Betriebsfall undrehbar auf der Achse 12 gehaltenen Sekundärteils S hinweggleiten.

Falls sich aber die beiderseitigen Sperrzähne der Stirnverzahnungen Z1 und Z2 in Eingriff befinden und eine Kraft F (s. Fig. 3 und 13) von oben auf die Armauflage 20 drückt, wird ein Drehmoment in Richtung des Drehpfeils N eines Abwärtsschwenks in die Stirnverzahnung Z1 des Primärteils P eingeleitet. Dies hat zur Folge, dass sich die Sperrzähne der Stirnverzahnung Z1 in den Zahnlücken zwischen den Sperrzähnen des undrehbar gehaltenen Sekundärteils S verhaken, so dass ein Abwärtsschwenk in Drehrichtung N nicht erfolgen kann.

Wie vorerwähnt, ist das Sekundärteil S im normalen Betriebsfall undrehbar auf der Achse 12 gehalten, jedoch mit seiner glatten Zentralbohrung 26 auf der Achse 12 drehgelagert, ebenso wie das Primärteil P mit seiner glatten Zentralbohrung 25. Andere Verhältnisse gelten für das Sekundärteil S im Falle einer Überlast, wie im folgenden noch erläutert wird.

An seiner bezüglich der Einbaulage gemäß Fig. 3 und Fig. 13 dem Primärteil P abgewandten Stirnseite des Sekundärteils S ist das Widerlagerteil W angeordnet, welches mit seiner glatten Zentralbohrung 27 auf der Achse 12 gelagert, welches jedoch mittels eines Seegerringes 28 (axialer Sicherungsring) gegen Axialverschiebung auf der Achse 12 gesichert ist, welche dazu an ihrer Außenmantelfläche mit einer Ringnut 24 versehen ist.

Das Sekundärteil S und das Widerlagerteil W bilden jeweils zwei sich axial erstreckende und mit ihren freien Endbereichen gegeneinander gerichtete Kupplungsklauen 29, 30, welche eine hinsichtlich ihrer Axiallänge veränderbare drehfeste Verbindung zwischen dem axial verschieblichen Sekundärteil S und dem axial unverschieblich auf der Achse 12 gehaltenen Widerlagerteil W darstellen.

Jede Kupplungsklaue 29, 30 und jede zwischen den Füßen zweier benachbarter Kupplungsklauen 29, 29 bzw. 30, 30 angeordnete Vertiefung 31 des Sekundärteils S und 32 des Widerlagerteils W bildet ein axiales Sackloch 33 zur endseitigen Aufnahme von vier sich parallel zur Achse 12 erstreckenden umfangsverteilten Schraubendruckfedern 34.

Anstelle der vier Schaubendruckfedern 34 kann zwischen dem Sekundärteil S und dem Widerlagerteil W eine koaxial zu den beiden letztgenannten Bauteilen angeordnete einzige Schraubendruckfeder (s. Fig. 13, Pos. 34) vorgesehen sein, welche sich entsprechend einer nicht gezeigten Ausführungsform an Ringschultern der jeweiligen Außenmantelfläche sowohl des Sekundärteils S als auch des Widerlagerteils W abstützen kann.

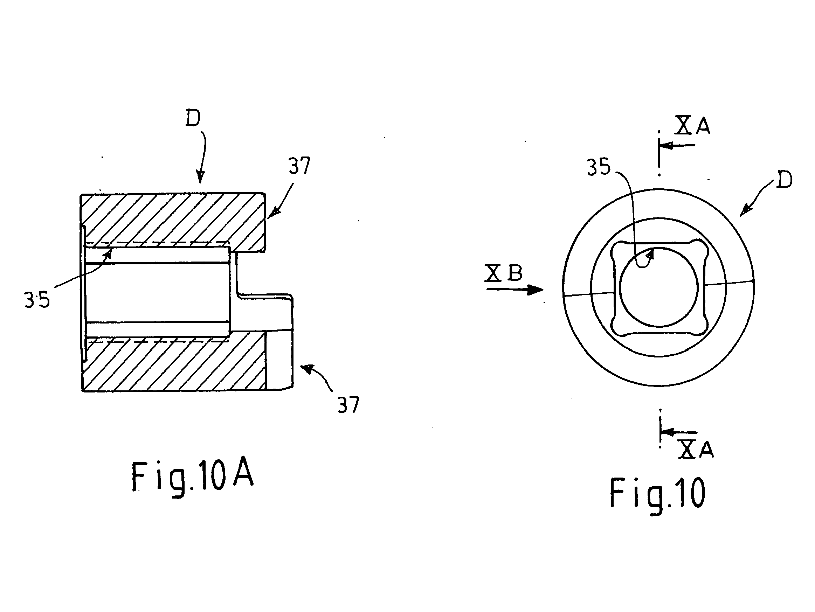

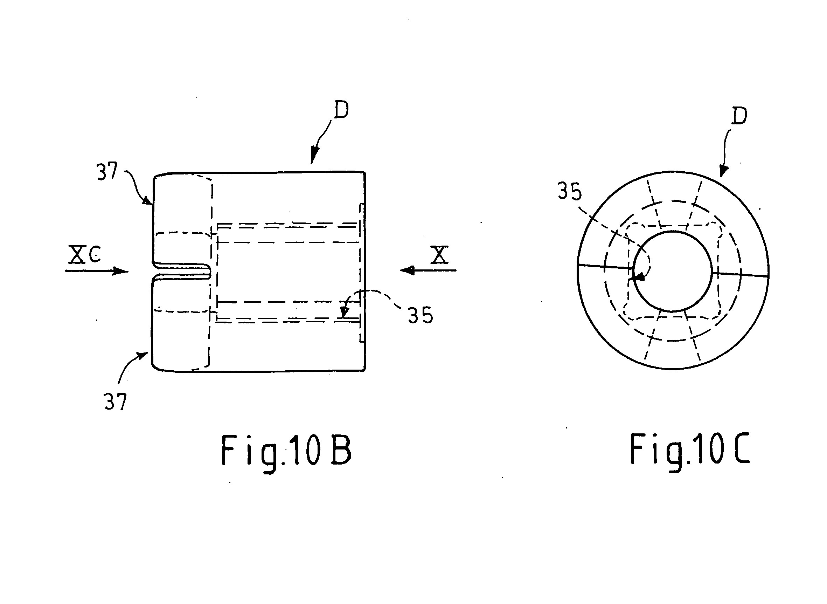

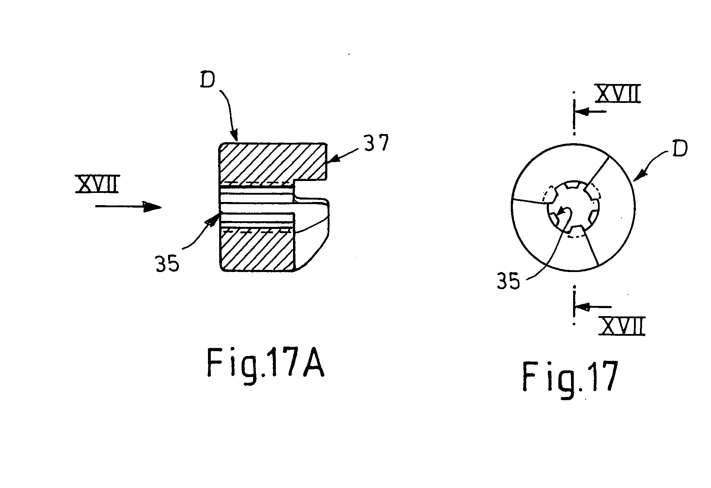

An der dem Sekundärteil S abgewandten Seite des Widerlagerteils W ist das Druckteil D angeordnet. Das Druckteil D (s. Fig. 10-10C) ist mit einem Innenvierkant 35 auf einem korrespondierenden Vierkantbereich 53 der Achse 12 axial verschieblich jedoch drehfest auf letzterer angeordnet. Bei der Ausführungsform entsprechend den Fig. 11-17A weist das Druckteil D (s. Fig. 17 und 17A) anstelle eines Innenvierkants eine dem Keilwellenprofil der Achse 12 korrespondierend profilierte zentrale Innenaufnahme 35 auf, so dass das Druckteil D zwar drehfest, jedoch axial verschieblich, auf der Achse 12 angeordnet ist.

Das Widerlagerteil W und das Druckteil D weisen jeweils zwei sich axial erstreckende und mit ihren freien Endbereichen gegeneinander gerichtete und ineinandergreifende kupplungsklauenartige Vorsprünge 36, 37 auf. Die kupplungsklauenartigen Vorsprünge 36 des Widerlagerteils W liegen mit sich axial und radial erstreckenden Anschlagflächen 38 an sich ebenfalls axial und radial erstreckenden Anschlagflächen 39 der beiden kupplungsklauenartigen Fortsätze 37 des Druckteils D an.

Außerdem liegen die beiden kupplungsklauenartigen Fortsätze 36 des Widerlagerteils W mit sich schräg zur Achse 12 erstreckenden schrägen Gleitflächen 40 an korrespondierend schrägen Gleitflächen 41 der beiden kupplungsklauenartigen Fortsätze 37 des Druckteils D an.

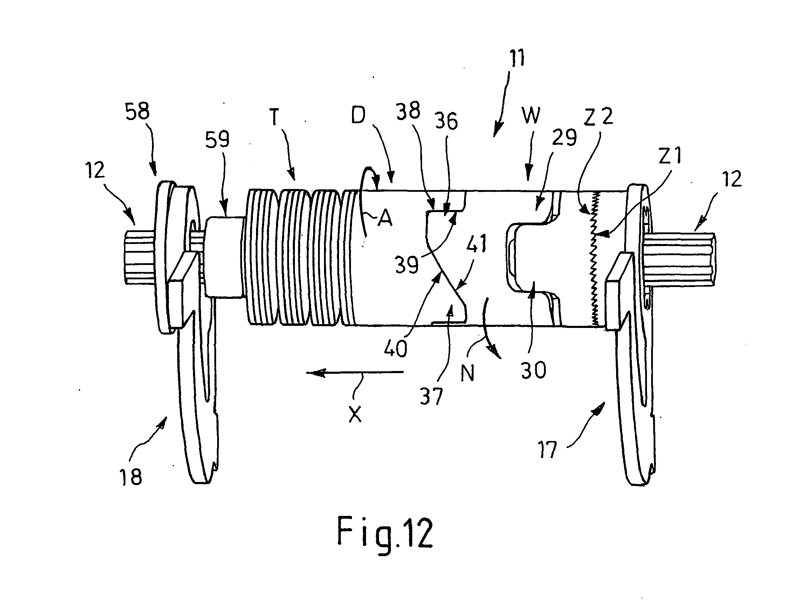

Auf der dem Widerlagerteil W abgewandten Stirnseite des Druckteils D ist ein Tellerfederpaket T angeordnet. Das Tellerfederpaket drückt das Druckteil D mit einer Federrückstellkraft gegen das auf der Achse 12 unverschiebliche Widerlagerteil W. Mittels der Einstellmutter E (gemäß den Fig. 12 und 13 zwar zumindest gleichwirkend vorhanden, jedoch nicht gezeigt), welche auf einem nicht dargestellten Außengewinde der Achse 12 sitzt, kann die Vorspannung des Tellerfederpakets T eingestellt und variiert werden.

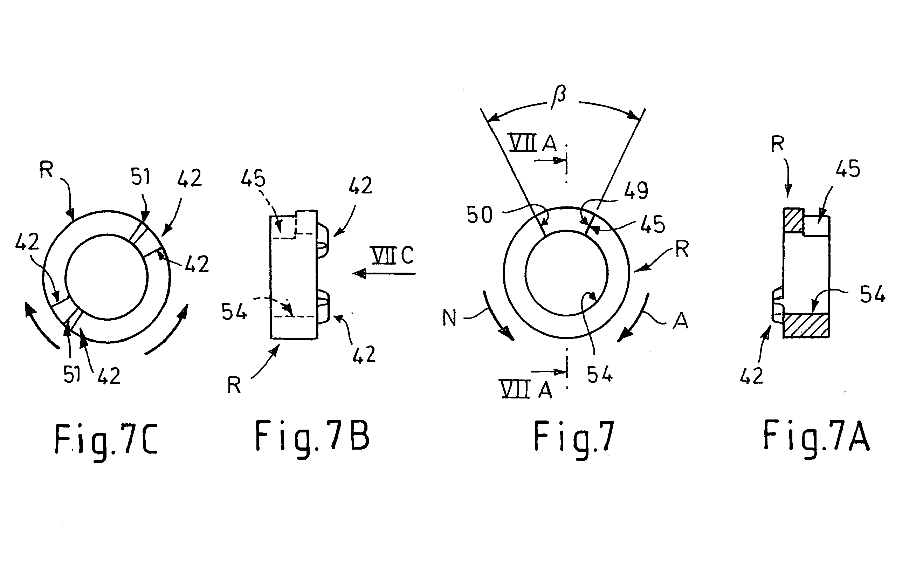

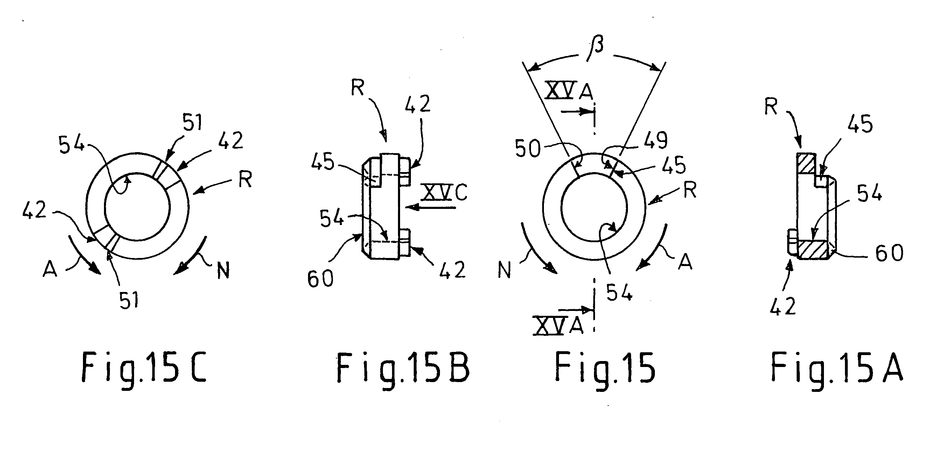

Eine besondere Funktion erfüllt der zwischen dem Primärteil P und dem Sekundärteil S angeordnete und mit seiner glatten Zentralbohrung 54 auf der Achse 12 gelagerte Steuerring R, welcher mit dem Primärteil P drehverbunden ist und welcher auf seiner dem Sekundärteil S zugewandten Stirnseite zwei Steuernocken 42 (s. Fig. 7-7C;Fig. 15-15C) bildet, welche mit einer Steuerbahn 43 des Sekundärteils S zusammenwirken.

Das Primärteil P (s. Fig. 6-7B und Fig. 14-14B) weist einen zum Sekundärteil S hinweisenden Mitnehmernocken 44 auf, welcher in eine zum Primärteil P weisende Mitnahmeaussparung 45 des Steuerringes R eingreift.

Das Primärteil P und das Sekundärteil S bilden ihre Stirnverzahnungen Z1 und Z2 jeweils auf einer radialen Kreisringfläche. Die Außenkontur jeder Kreisringfläche bildet dabei zugleich im wesentlichen die Außenkontur der Querschnittsfläche von Primärteil P und Sekundärteil S.

Jede Stirnverzahnung Z1, Z2 erstreckt sich gleichflächig jeweils über den gesamten Umfang von Primärteil P und Sekundärteil S.

Das Primärteil P und das Sekundärteil S bilden im Anschluß an die jeweilige Stirnverzahnung Z1 und Z2 radial innen eine im wesentlichen kreiszylindrische Ausnehmung 46, 47. Die offenen Seiten der beiden kreiszylindrischen Ausnehmungen 46, 47 sind einander zugewandt und bilden so eine gemeinsame Ausnehmung zur Aufnahme des Steuerringes R. Für gewisse Anwendungsfälle kann es zweckmäßig sein, dass zwischen der Ausnehmung 46 des Primärteils P und dem einen korrespondierenden Bereich des Steuerrings R eine größere Reibung herrscht als zwischen der Ausnehmung 47 des Sekundärteils S und dem anderen korrespondierenden Bereich des Steuerrings R. Deswegen bildet die Ausnehmung 46 des Primärteils P eine kreisringartige V-förmige Vertiefung 56 und der Steuerring R einen kreisringartigen V-förmigen Vorsprung 60.

Die Mitnahmeaussparung 45 des Steuerringes R weist mit ihrem Umfangswinkel β eine größere Umfangserstreckung auf als der Mitnehmernocken 44 des Primärteils P mit seinem Umfangswinkel α. So kann beispielsweise der Winkel β = 60° und der Winkel α = etwa 45° betragen, so dass dem Mitnehmernocken 44 für einen Vorlauf bzw. für einen Rücklauf eine Umfangswinkeldifferenz von etwa 15° zur Verfügung steht.

Den beiden Steuernocken 42 des Steuerringes R ist in der Steuerbahn 43 des Sekundärteils S je eine dort eingelassene Steueraussparung 48 zugeordnet. Die Steuerbahn 43 an sich stellt eine sich radial zur Achse 12 erstreckende ebene Kreisringfläche dar, welche als radiale Stufenfläche Teil der den Steuerring R aufnehmenden kreiszylindrischen Ausnehmung 47 ist.

Die Funktion der in den Zeichnungen dargestellten Armlehne ist folgende:

Wenn sich der Armlehnenkörper 17 in seiner untersten Stellung befindet, liegt der Mitnehmernocken 44 an der zweiten Anschlagfläche 50 der Mitnahmeaussparung 45 des Steuerringes R an. Weil der Umfangswinkel β der Mitnahmeaussparung 45 um z.B. 15° größer ist als der Umfangswinkel α, über den sich der Mitnehmernocken 44 erstreckt, steht dem mit dem Armlehnenkörper 17 drehverbundenen Primärteil P ein umfänglicher Bewegungsraum von 15° zur Verfügung. Entlang dieses umfänglichen Bewegungsraums kann der Armlehnenkörper über z.B. vier Zähne der drehfest gehaltenen Stirnverzahnung Z2 des Sekundärteils S hinweg Zahnlücke für Zahnlücke aufwärts geschwenkt werden.

Ein unmittelbarer Abwärtsschwenk aus einer dieser vier Positionen ist nicht möglich, weil sich die Stirnverzahnungen Z1 und Z2 im sperrenden Eingriff befinden.

Der begrenzte Aufwärtsschwenk um 15° ist ohne weiteres möglich, weil die Sperrzähne der Stirnverzahnung Z1 des Primärteils P ungehindert über die Gleitflanken der Sperrzähne der undrehbar gehaltenen Stirnverzahnung Z2 des Sekundärteils S hinweggleiten können.

Auf diese Weise wäre es zwar grundsätzlich möglich, den Aufwärtsschwenk bis zur aufrechten Position des Armlehnenkörpers 17 weiterzuführen, jedoch würden die damit einhergehenden, zwischen den beiden Stirnverzahnungen Z1 und Z2 entstehenden Rastgeräusche als unangenehm empfunden. Um diese unangenehme Geräuschentwicklung zu vermeiden, hat die Erfindung folgenden Weg beschritten:

Sobald der Mitnehmernocken 44 gegen die erste Anschlagfläche 49 der Mitnahmeaussparung 45 des Steuerringes R stößt und der Aufwärtsschwenk anschließend in Drehrichtung A weitergeführt wird, gleiten die beiden Steuernocken 42 mit ihren Schrägflächen 51 voran über die Schrägflächen 52 der sekundärteilseitigen Steueraussparungen 48 hinweg und aus letzteren heraus, wie anhand der mit A bezeichneten Drehrichtungspfeile insbesondere anhand der Fig. 7, 7C sowie Fig. 8D und auch anhand von 15, 15C sowie 16D vorstellbar ist.

Hierdurch wird das Sekundärteil S entgegen der Rückstellkraft der Schraubendruckfedern 34 vom Primärteil P weggedrückt, so dass die Stirnverzahnungen Z1, Z2 außer Eingriff geraten und der Tragarm 17 bis zu seiner aufrechten Position geräuschlos hochgeschwenkt werden kann. Bei diesem Aufwärtsschwenk bewegen sich die beiden Steuernocken 42 über die ebene Steuerbahn 43.

Wenn nun, beginnend mit der aufrechten Position des Armlehnenkörpers 17, der Abwärtsschwenk eingeleitet werden soll, dreht sich der Mitnehmernocken 44 in Drehrichtung N von der ersten Anschlagfläche 49 zurück in seine vorbeschriebene Ausgangsposition an der Anschlagfläche 50.

Sodann bewegen sich die Steuernocken 42 wiederum über die ebene Steuerbahn 43 zurück in Drehrichtung N (s. Fig. 7C, 8D sowie Fig. 15C, 16D) und gleiten schließlich wieder zurück in die Steueraussparungen 48 der sekundärteilseitigen Steuerbahn 43, womit sich der Armlehnenkörper 17 wiederum in seiner vorbeschriebenen tiefsten Ausgangsstellung befindet, und die Stirnverzahnungen Z1 und Z2 in ihre Eingriffsstellung zurückgeführt sind.

Um in jedem Falle sicherzustellen, dass sich beim Abwärtsschwenk in Drehrichtung N der Mitnehmernocken 44 von der ersten Anschlagfläche 49 zurück in seine vorgeschriebene Ausgangsposition an der Anschlagfläche 50 bewegt, um wiederum bei dem in Aufwärtsrichtung A gerichteten nachfolgenden Einstellhub einen Vorlauf von 15° zu gewährleisten, sieht die Erfindung entsprechend der Ausführungsform gemäß den Fig. 11-17A folgendes vor:

In Aufwärtsdrehrichtung A jeweils unmittelbar neben jeder sekundärteilseitigen Steueraussparung 48 ragt aus der ebenen Steuerbahn 43 in Axialrichtung x zum Steuerring R hin eine Erhebung als Schaltschwelle 55 vor.

Sobald der Mitnehmernocken 44 gegen die erste Anschlagfläche 49 der Mitnahmeaussparung 45 des Steuerringes R stößt und der Aufwärtsschwenk anschließend in Drehrichtung A weitergeführt wird, gleiten wiederum die beiden Steuernocken 42 mit ihren Schrägflächen 51 voran über die Schrägflächen 52 der sekundärteilseitigen Steueraussparungen 48 hinweg sowie aus letzteren heraus und, wie anhand von Fig. 16D vorstellbar ist, auf die Schaltschwellen 55 hinauf und über diese hinweg. Dabei wird wiederum das Sekundärteil S entgegen einer Federrückstellkraft, und zwar gegen die Rückstellkraft der einzigen Schraubendruckfeder 34, vom Primärteil P weggedrückt, so dass die Stirnverzahnungen Z1, Z2 außer Eingriff geraten und der Tragarm 17 bis zu seiner aufrechten Position geräuschlos hochgeschwenkt werden kann. Bei diesem Aufwärtsschwenk in Richtung A bewegen sich die beiden Steuernocken 42 über die ebene Steuerbahn 43. Wenn nun, beginnend mit der gänzlich angehobenen Position des Tragarms 17, die durch einen externen Anschlag markiert sein kann, wiederum der Abwärtsschwenk in Richtung N eingeleitet werden soll, dreht sich der Mitnehmer-nocken 44 in Richtung N von der ersten Anschlagfläche 49 zurück in seine vorbeschriebene Ausgangsposition an der Anschlagfläche 50. Damit dieses Zurückdrehen erfolgen kann, bedarf es einer Relativbewegung zwischen mit Primärteil P und dem Steuerring R, welche beim Ausführungsbeispiel gemäß den Fig. 1-10C auf Haftreibung basiert, welche den Steuerring R bezüglich der sekundärteilseitigen Steuerbahn 43 zurückhält. Dieses Zurückhalten tritt indessen bei der Schaltschwelle 55 gemäß Fig. 16D in jedem Fall ein, weil die Steuernocken 42 beim Abwärtshub in Richtung N jeweils gegen die Schaltkante 57 der Schaltschwelle 55 anlaufen und somit eine Anlage des primärteilseitigen Mitnehmernockens 44 an der zweiten Anschlagfläche 50 des Steuerringes R sicherstellen.

Für den Fall, dass sich der Armlehnenkörper 17 in seiner tiefsten Ausgangsstellung befindet und eine Überlast in Richtung F auf den Armlehnenkörper 17 einwirkt und versucht den Armlehnenkörper 17 in Drehrichtung N abwärts zu schwenken, befinden sich die beiden Stirnverzahnungen Z1 und Z2 in sperrendem Eingriff.

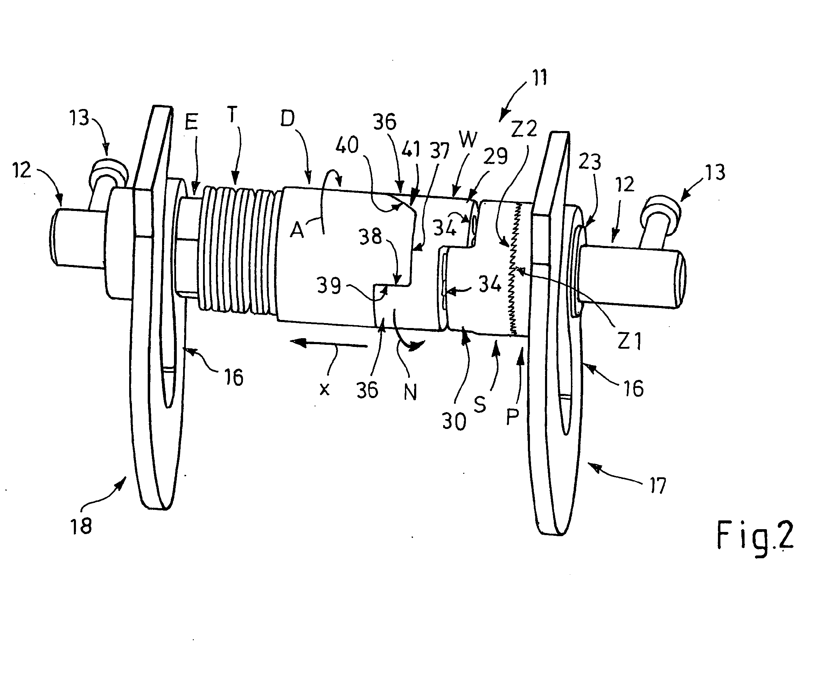

Über die Drehverbindung mittels der Kupplungsklauen 29, 30 des Sekundärteils S und des Widerlagerteils W wird das durch die Überlast hervorgerufene Drehmoment auf das Widerlagerteil W übertragen, so dass das Widerlagerteil W in Richtung N (s. Fig. 2 und 12) dreht und die schrägen Gleitflächen 40 der kupplungsklauenartigen Fortsätze 36 des Widerlagerteils W die schrägen Gleitflächen 41 der kupplungsklauenartigen Fortsätze 37 des Druckteils D in Axialrichtung x zurückdrängen. Auf diese Weise kann das unter der Überlast in Drehrichtung N weiterdrehende Widerlagerteil W bezüglich des raumfest gehaltenen Druckteils D eine Ausweichdrehung durchführen und dadurch die Armlehne 10 entlasten.

## Patentansprüche

1. Armlehne, wie Mittelarmlehne (10), mit einem um eine horizontale Achse (12) zwischen einer angehobenen und einer abgesenkten Position einstellbar schwenkbaren Armlehnenkörper (17), dem ein nur beim Abwärtsschwenk sperrendes Zahnrichtgesperre (P, S) zugeordnet ist, welches ein mit dem Armlehnenkörper drehverbundenes, um die Achse (12) drehbares Primärteil (P) aufweist, mit welchem ein bezüglich der Achse (12) zumindest begrenzt drehfest gehaltenes Sekundärteil (S) kooperiert, wobei dem Zahnrichtgesperre (P, S) eine Steuereinrichtung (R, 43) zugeordnet ist, welche bei angehobener Position und beginnendem Abwärtsschwenk des Armlehnenkörpers (17) Primärteil (P) und Sekundärteil (S) voneinander trennt und im Bereich der abgesenkten Position wieder in Eingriff miteinander versetzt, wobei Primärteil (P) und Sekundärteil (S) einander zugewandte, zur Achse (12) koaxiale, etwa nach Art einer Stirnzahnkupplung angeordnete Stirnverzahnungen (Z1, Z2) bilden und Primärteil oder Sekundärteil axial beweglich sind, und wobei die Primärteil (P) und Sekundärteil (S) in oder außer Eingriff versetzende Steuereinrichtung (R, 43) mindestens einen mit dem Primärteil (P) umlaufenden Steuernocken (42) oder mindestens eine mit dem Primärteil (P) umlaufende Steuerbahn und, dazu korrelierend, mindestens eine mit dem Sekundärteil (S) feste Steuerbahn (43) oder mindestens einen mit dem Sekundärteil (S) festen Steuernocken bildet, wobei mindestens eine Druckfeder (34) das Primärteil (P) und das Sekundärteil (S) mit ihren Stirnverzahnungen (Z1, Z2) gegeneinanderdrückt, und wobei ein auf der Achse (12) gegen Axialverschiebung gesichertes Widerlagerteil (W) eine Axialverschiebung des Primärteils (P) oder des Sekundärteils (S) begrenzt, **dadurch gekennzeichnet, dass** das Primärteil (P) auf der Achse (12) axial fest und das Sekundärteil (S) auf der Achse (12) beweglich angeordnet ist, dass das Widerlagerteil (W) auf der der Stirnverzahnung (Z2) des Sekundärteils (S) abgewandten Seite angeordnet ist, und dass zwischen dem Sekundärteil (S) und dem Widerlagerteil (W) die mindestens eine Druckfeder (34) angeordnet ist.

2. Armlehne nach Anspruch 1, **dadurch gekennzeichnet, dass** zwischen dem Primärteil (P) und dem Sekundärteil (S) ein mit dem Primärteil (P) drehverbundener Steuerring (R) angeordnet ist und dass das Primärteil (P) einen zum Sekundärteil (S) hin weisenden Mitnehmernocken (44) aufweist, welcher in eine zum Primärteil (P) weisende Mitnahmeaussparung (45) des Steuerringes (R) eingreift, der an seiner dem Sekundärteil (S) zugewandten Seite mindestens einen, insbesondere zwei, Steuernocken (42) bildet, welcher/welche mit der mit dem Sekundärteil (S) festen Steuerbahn (43) kooperiert/kooperieren.

3. Armlehne nach Anspruch 1 oder nach Anspruch 2, **dadurch gekennzeichnet, dass** Primärteil (P) und Sekundärteil (S) jeweils eine die Stirnverzahnung (Z1, Z2) tragende radiale Kreisringfläche bilden, dass Primärteil (P) und Sekundärteil (S) jeweils im Anschluß an die Kreisringfläche (bei Z1, bei Z2) radial innen eine im wesentlichen kreiszylindrische Ausnehmung (46, 47) bilden, dass die offenen Seiten beider kreiszylindrischer Ausnehmungen (46, 47) einander zugewandt sind und dass die beiden kreiszylindrischen Ausnehmungen (46, 47) gemeinsam den Steuerring (R) aufnehmen.

4. Armlehne nach einem der Ansprüche 1 bis 3, **dadurch gekennzeichnet, dass** die Mitnahmeaussparung (45) des Steuerringes (R) eine größere Umfangserstreckung als der Mitnehmernocken (44) des Primärteils (P) aufweist, derart, dass das Primärteil (P) sowohl bei abgesenkter Position und beginnendem Aufwärtsschwenk als auch bei angehobener Position und beginnendem Abwärtsschwenk des Armlehnenkörpers (17) einen Vorlauf bis zum Anschlag des Mitnehmernockens (44) an der jeweiligen ersten (49) oder zweiten (50) Anschlagfläche der Mitnahmeaussparung (46) erhält.

5. Armlehne nach einem der Ansprüche 2 bis 4, **dadurch gekennzeichnet, dass** dem mindestens einen Steuernocken (42) eine in der dem Primärteil (P) zugewandten Steuerbahn (43) des Sekundärteils (S) eingelassene Steueraussparung (48) zugeordnet ist und dass die Steuerbahn (43) eine sich radial zur Achse (12) erstreckende ebene Kreisringfläche bildet.

6. Armlehne nach Anspruch 5, **dadurch gekennzeichnet, dass** eine kreisringförmige Stufenfläche der den Steuerring (R) aufnehmenden kreiszylindrischen Ausnehmung (47) des Sekundärteils (S) die eine ebene Kreisringfläche bildende Steuerbahn (43) darstellt.

7. Armlehne nach Anspruch 5 oder nach Anspruch 6, **dadurch gekennzeichnet, dass** der mindestens eine Steuernocken (42) des Steuerringes (R) aus der Steueraussparung (48) heraus und auf die ebene Steuerbahn (43) hinübergleitet, sobald der Mitnehmernocken (44) des Primärteils (P) beim Aufwärtsschwenk gegen die erste Anschlagfläche (48) der Mitnahmeaussparung (45) des Steuerringes (R) anläuft, und dass der mindestens eine Steuernocken (42) bei sich fortsetzendem Aufwärtsschwenk bis zur aufrechten Position des Armlehnenkörpers (17) auf der kreisringförmigen Steuerbahn (43) verbleibt.

8. Armlehne nach einem der Ansprüche 1 bis 7, **dadurch gekennzeichnet, dass** das Widerlagerteil (W) zumindest begrenzt drehfest auf der Achse (12) angeordnet ist, und dass Sekundärteil (S) und Widerlagerteil (W) drehfest miteinander gekuppelt bzw. verbunden sind.

9. Armlehne nach Anspruch 8, **dadurch gekennzeichnet, dass** das Sekundärteil (S) und das Widerlagerteil (W) jeweils zwei sich axial erstreckende und mit ihren freien Endbereichen gegeneinander gerichtete und ineinandergreifende Kupplungsklauen (29, 30) bilden, welche die drehfeste Verbindung zwischen dem axial verschieblichen Sekundärteil (S) und dem auf der Achse (12) drehgelagerten und axial gesicherten Widerlagerteil (W) darstellen.

10. Armlehne nach Anspruch 9, **dadurch gekennzeichnet, dass** jede Kupplungsklaue (29, 30) und jede zwischen den Füßen zweier benachbarten Kupplungsklauen 29, 29; 30, 30) angeordnete Vertiefung (31) des Sekundärteils (S) und (32) des Widerlagerteils (W) je ein Sackloch (33) zur jeweils beidendigen Aufnahme von vier sich parallel zur Achse (12) erstreckenden umfangsverteilten Schraubendruckfedern (34) bildet.

11. Armlehne nach einem der Ansprüche 1 bis 9, **dadurch gekennzeichnet, dass** zwischen dem Sekundärteil (S) und dem Widerlagerteil (W) eine koaxial zu den letztgenannten Bauteilen (S, W) angeordnete einzige Schraubendruckfeder vorgesehen ist.

12. Armlehne nach Anspruch 11, **dadurch gekennzeichnet, dass** sich die Schraubendruckfeder an Ringschultern der jeweiligen Außenmantelfläche sowohl des Sekundärteils (S) als auch des Widerlagerteils (W) abstützt.

13. Armlehne nach einem der Ansprüche 8 bis 12, **dadurch gekennzeichnet, dass** das Widerlagerteil Bestandteil einer Überlastsicherung ist, welche einen Abwärtsschwenk des in seiner abgesenkten Position befindlichen Armlehnenkörpers freigibt.

14. Armlehne nach Anspruch 13, **dadurch gekennzeichnet, dass** an der dem Sekundärteil (S) abgewandten Seite des Widerlagerteils (W) ein sich mit einer Federrückstellkraft (T) gegen das Widerlagerteil (W) abstützendes Druckteil (D) auf der Achse (12) drehfest und axial verschieblich angeordnet ist, dass das Widerlagerteil (W) und das Druckteil (D) jeweils zwei sich axial erstreckende und mit ihren freien Endbereichen gegeneinander gerichtete und ineinandergreifende kupplungsklauenartige Vorsprünge (36, 37) aufweisen, und dass die kupplungsklauenartigen Vorsprünge (36) des Widerlagerteils (W) und jene (37) des Druckteils (D) bezüglich eines Aufwärtsschwenks (A) des Armlehnenkörpers (17) mit sich axial und radial erstreckenden Anschlagflächen (38, 39) und bezüglich eines Abwärtsschwenks (N) des Armlehnenkörpers (17) mit sich schräg zur Achse (12) erstreckenden schrägen Gleitflächen (40, 41) aneinanderliegen.

15. Armlehne nach Anspruch 14, **dadurch gekennzeichnet, dass** die Achse (12) das Druckteil (D) auf einem unrunden zylindrischen Achsbereich (53) axial verschieblich aufnimmt und dass die Querschnittsform der unrunden zylindrischen Aufnahme (35) des Druckteils (D) der Querschnittsform des unrunden zylindrischen Achsbereichs (53) entspricht.

16. Armlehne nach Anspruch 15, **gekennzeichnet durch** je einen Vierkantquerschnitt des unrunden zylindrischen Achsbereichs (53) und der unrunden zylindrischen Aufnahme (35) des Druckteils (D).

17. Armlehne nach Anspruch 15 oder nach Anspruch 16, **dadurch gekennzeichnet, dass** die das Druckteil (D) in Richtung auf das Widerlagerteil (W) beaufschlagende Federrückstellkraft von einem Tellerfederpaket (T) gebildet ist.

18. Armlehne nach den Ansprüchen 1 bis 17, **gekennzeichnet durch** ein Zahnrichtgesperre (P, S), Steuereinrichtung (R, 43) und Überlastsicherung (W, D, T, E) koaxial umgreifendes Hüllrohr (14).

19. Armlehne nach Anspruch 18, **dadurch gekennzeichnet, dass** das Hüllrohr (14) eine drehfeste Verbindung zwischen zwei Endbereichen (17, 18) des Armlehnenkörpers bildet.

20. Armlehne nach einem der Ansprüche 1 bis 19, **dadurch gekennzeichnet, dass** die Achse (12) auf gesamter axialer Länge ein Keilwellenprofil aufweist, wobei auf der Achse (12) das Primärteil (P), der Steuerring (R), das Sekundärteil (S) und das Widerlagerteil (W) mit jeweils einer glatten zentralen Durchgangsbohrung (25, 54, 26, 27) drehbar gelagert sind, während zumindest ein Druckteil (D) mittels einer entsprechend dem Keilwellenprofil profilierten zentralen Aufnahme (35) drehfest auf der Achse (12) angeordnet ist.

21. Armlehne nach Anspruch 20, **dadurch gekennzeichnet, dass** die Achse (12) mindestens eine an ihrem Umfang angeordnete Aufnahme, wie z.B. einer Ringnut (24) zur Halterung eines axialen Sicherungselements, wie z.B. eines Seegerringes (28), aufweist.

22. Armlehne nach Anspruch 20 oder nach Anspruch 21, **dadurch gekennzeichnet, dass** in Aufwärtsschwenkrichtung (A) jedes Steuernockens (42), der jeweiligen Steueraussparung (48) folgend, aus der ebenen Steuerbahn (43) in Axialrichtung (x) zum Steuerring (R) hin eine Erhebung als Schaltschwelle (55) vorragt, gegen welche der Steuernocken (42) bei seiner Drehung in Abwärtsschwenkrichtung (N) anläuft.

23. Armlehne nach Anspruch 22, **dadurch gekennzeichnet, dass** die Schaltschwelle (55) unmittelbar neben der ihr zugeordneten Steueraussparung (48) angeordnet ist.

## Claims

1. Armrest, such as a centre armrest (10), comprising an armrest body (17), which is pivotable about a horizontal axle (12) adjustably between a raised and a lowered position and associated with which is a ratchet-and-pawl locking mechanism (P, S), which locks only during the downward swivel and comprises a primary part (P), which is rotatably connected to the armrest body and is rotatable about the axle (12) and with which a secondary part (S) cooperates, which is held non-rotatably at least to a limited extent relative to the axle (12), wherein there is associated with the ratchet-and-pawl locking mechanism (P, S) a control device (R, 43), which in the raised position and at the start of a downward swivel of the armrest body (17) separates primary part (P) and secondary part (S) from one another and in the region of the lowered position returns them to a state of mutual engagement, wherein primary part (P) and secondary part (S) form mutually opposing spur-gear units (Z1, Z2), which are coaxial with the axle (12) and disposed approximately in the manner of a spur-tooth clutch, and primary part and secondary part are axially movable, and wherein the control device (R, 43) that sets primary part (P) and secondary part (S) into and out of engagement forms at least one radial cam (42) rotating with the primary part (P) or at least one control path rotating with the primary part (P) and, correlating thereto, at least one control path (43) fixed to the secondary part (S) or at least one radial cam fixed to the secondary part (S), wherein at least one compression spring (34) presses the primary part (P) and the secondary part (S) with their spur-gear units (Z1, Z2) against one another, and wherein an abutment part (W) locked against axial displacement on the axle (12) limits an axial displacement of the primary part (P) or of the secondary part (S), **characterized in that** the primary part (P) is disposed in an axially fixed manner on the axle (12) and the secondary part (S) is disposed movably on the axle (12), that the abutment part (W) is disposed at the side remote from the spur-gear unit (Z2) of the secondary part (S), and that between the secondary part (S) and the abutment part (W) the at least one compression spring (34) is disposed.

2. Armrest according to claim 1, **characterized in that** disposed between the primary part (P) and the secondary part (S) is a control ring (R) that is rotatably connected to the primary part (P), and that the primary part (P) has a driver cam (44), which is directed towards the secondary part (S) and engages into a driving cutout (45), facing the primary part (P), of the control ring (R), which on its side facing the secondary part (S) forms at least one, in particular two radial cams (42), which cooperates/cooperate with the control path (43) fixed to the secondary part (S).

3. Armrest according to claim 1 or according to claim 2, **characterized in that** primary part (P) and secondary part (S) each form a radial annular surface that carries the spur-gear unit (Z1, Z2), that primary part (P) and secondary part (S) each form, adjacent to and radially inside the annular surface (at Z1, at Z2), a substantially circular-cylindrical recess (46, 47), that the open sides of both circular-cylindrical recesses (46, 47) face one another and that the two circular-cylindrical recesses (46, 47) jointly receive the control ring (R).

4. Armrest according to one of claims 1 to 3, **characterized in that** the driving cutout (45) of the control ring (R) has a larger circumferential extent than the driver cam (44) of the primary part (P), such that the primary part (P) not only in a lowered position and at the start of an upward swivel but also in a raised position and at the start of a downward swivel of the armrest body (17) maintains a forward motion until the driver cam (44) strikes against the respective first (49) or second (50) stop face of the driving cutout (46).

5. Armrest according to one of claims 2 to 4, **characterized in that** associated with the at least one radial cam (42) is a control cutout (48), which is let into the control path (43) of the secondary part (S) that faces the primary part (P), and that the control path (43) forms a flat annular surface extending radially relative to the axle (12).

6. Armrest according to claim 5, **characterized in that** an annular step surface of the circular-cylindrical recess (47) of the secondary part (S) that receives the control ring (R) is the control path (43) that forms a flat annular surface.

7. Armrest according to claim 5 or according to claim 6, **characterized in that** the at least one radial cam (42) of the control ring (R) slides out of the control cutout (48) and over onto the flat control path (43) as soon as the driver cam (44) of the primary part (P) during the upward swivel runs against the first stop face (48) of the driving cutout (45) of the control ring (R), and that the at least one radial cam (42) during the continuing upward swivel into the upright position of the armrest body (17) remains on the annular control path (43).

8. Armrest according to one of claims 1 to 7, **characterized in that** the abutment part (W) is disposed rotationally fixed at least to a limited extent on the axle (12), and that secondary part (S) and abutment part (W) are coupled and/or connected to one another in a rotationally fixed manner.

9. Armrest according to claim 8, **characterized in that** the secondary part (S) and the abutment part (W) each form two axially extending, intermeshing clutch pawls (29, 30), which are oriented with their free end regions towards one another and represent the rotationally fixed connection between the axially displaceable secondary part (S) and the abutment part (W), which is rotatably mounted and axially locked on the axle (12).

10. Armrest according to claim 9, **characterized in that** each clutch pawl (29, 30) and each indentation (31) of the secondary part (S) and (32) of the abutment part (W) disposed between the feet of two adjacent clutch pawls (29, 29; 30, 30) forms a blind hole (33) for receiving both ends of four circumferentially distributed helical compression springs (34) extending parallel to the axle (12).

11. Armrest according to one of claims 1 to 9, **characterized in that** provided between the secondary part (S) and the abutment part (W) is a single helical compression spring that is disposed coaxially with the last-mentioned components (S, W).

12. Armrest according to claim 11, **characterized in that** the helical compression spring is supported against annular shoulders of the respective outer lateral surface of both the secondary part (S) and the abutment part (W).

13. Armrest according to one of claims 8 to 12, **characterized in that** the abutment part is part of an overload protection device that enables a downward swivel of the armrest body situated in the lowered position thereof.

14. Armrest according to claim 13, **characterized in that** on the side of the abutment part (W) remote from the secondary part (S) a thrust part (D), which is supported with a spring restoring force (T) against the abutment part (W), is disposed in a rotationally fixed and axially displaceable manner on the axle (12), that the abutment part (W) and the thrust part (D) each have two axially extending, intermeshing clutch-pawl-like projections (36, 37), which are oriented with their free end regions towards one another, and that the clutch-pawl-like projections (36, 37) of the abutment part (W) and the thrust part (D) are in mutual contact, with regard to an upward swivel (A) of the armrest body (17), by means of axially and radially extending stop faces (38, 39) and, with regard to a downward swivel (N) of the armrest body (17), by means of oblique sliding faces (40, 41) extending obliquely relative to the axle (12).

15. Armrest according to claim 14, **characterized in that** the axle (12) receives the thrust part (D) in an axially displaceable manner on a non-circular cylindrical axle region (53) and that the cross-sectional shape of the non-circular cylindrical receiver (35) of the thrust part (D) corresponds to the cross-sectional shape of the non-circular cylindrical axle region (53).

16. Armrest according to claim 15, **characterized by** a square cross section of the non-circular cylindrical axle region (53) and of the non-circular cylindrical receiver (35) of the thrust part (D).

17. Armrest according to claim 15 or according to claim 16, **characterized in that** the spring restoring force that loads the thrust part (D) in the direction of the abutment part (W) is formed by a cup-spring assembly (T).

18. Armrest according to claims 1 to 17, **characterized by** a jacket tube (14) that coaxially surrounds ratchet-and-pawl locking mechanism (P, S), control device (R, 43) and overload protection device (W, D, T, E).

19. Armrest according to claim 18, **characterized in that** the jacket tube (14) forms a rotationally fixed connection between two end regions (17, 18) of the armrest body.

20. Armrest according to one of claims 1 to 19, **characterized in that** the axle (12) along the entire axial length has a spline, wherein on the axle (12) the primary part (P), the control ring (R), the secondary part (S) and the abutment part (W) are mounted rotatably in each case by a smooth central through-bore (25, 54, 26, 27), while at least one thrust part (D) is disposed in a rotationally fixed manner on the axle (12) by means of a central receiver (35) profiled in accordance with the spline.

21. Armrest according to claim 20, **characterized in that** the axle (12) has disposed on its circumference at least one receiver, such as e.g. an annular groove (24) for holding an axial locking element, such as e.g. a Seeger circlip ring (28).

22. Armrest according to claim 20 or according to claim 21, **characterized in that** in upward swivel direction (A) of each radial cam (42), following the respective control cutout (48), there projects out of the flat control path (43) in axial direction (x) towards the control ring (R) a raised portion as operating threshold (55), against which the radial cam (42) runs during its rotation in downward swivel direction (N).

23. Armrest according to claim 22, **characterized in that** the operating threshold (55) is disposed directly next to the control cutout (48) associated with it.

## Revendications

1. Accoudoir, tel qu'accoudoir central (10), avec un corps d'accoudoir (17) susceptible de pivoter, réglable autour d'un axe horizontal (12) entre une position levée et une position abaissée, corps d'accoudoir auquel est associé un verrou unidirectionnel à rochets (P, S), bloquant uniquement lors du pivotement d'abaissement, présentant une partie primaire (P) susceptible de tourner autour de l'axe (12), reliée en rotation au corps d'accoudoir, partie primaire avec laquelle coopère une partie secondaire (S) maintenue de façon assujettie en rotation, au moins de façon limitée, par rapport à l'axe (12), au verrou unidirectionnel à rochets (P, S) étant associé un dispositif de commande (R, 43), qui, à la position levée et au commencement du pivotement d'abaissement du corps d'accoudoir (17), sépare l'une de l'autre la partie primaire (P) et la partie secondaire (S) et, dans la zone de la position abaissée, les remet à nouveau en prise, la partie primaire (P) et la partie secondaire (S) formant des dentures frontales (Z1, Z2) coaxiales par rapport à l'axe (12), disposées par exemple à la façon d'un accouplement à dents frontales, et la partie primaire ou la partie secondaire étant mobile axialement, et où la partie primaire (P) et la partie secondaire (S), dans le dispositif de commande (R, 43) mettant en prise ou hors de prise, forment une came de commande (42) tournant avec la partie primaire (P), ou au moins une piste de commande tournant avec la partie primaire (P) et, en corrélation avec cela, au moins une piste de commande (43) fixe, avec la partie secondaire (S), ou au moins une piste de commande fixe, avec la partie secondaire (S), sachant qu'au moins un ressort de compression (34) presse l'une contre l'autre la partie primaire (P) et la partie secondaire (S) avec leurs dentures frontales (Z1, Z2), et une partie de contre-appui (W), assurée sur l'axe (12) contre un déplacement axial, limitant un déplacement axial de la partie primaire (P) ou de la partie secondaire (S), **caractérisé en ce que** la partie primaire (P) est disposée axialement fixe sur l'axe (12), et la partie secondaire (S) est disposée mobile sur l'axe (12), **en ce que** la partie de contre-appui (W) est disposée sur le côté opposé à la denture frontale (Z2) de la partie secondaire (S), et **en ce que** le au moins un ressort de compression (34) est disposé entre la partie secondaire (S) et la partie de contre-appui (W).

2. Accoudoir selon la revendication 1, **caractérisé en ce qu'**une bague de commande (R), reliée en rotation à la partie primaire (P), est disposée entre la partie primaire (P) et la partie secondaire (S), et **en ce que** la partie primaire (P) présente une came formant organe d'entraînement (44), tournée vers la partie secondaire (S), qui vient en prise dans un évidement d'entraînement (45), tourné vers la partie primaire (P), de la bague de commande (R), qui, sur sa face, tournée vers la partie secondaire (S), forme au moins une, en particulier deux, cames de commande (42), qui coopère/coopèrent avec la piste de commande (43) fixée à la partie secondaire (S).

3. Accoudoir selon la revendication 1 ou selon la revendication 2, **caractérisé en ce que** la partie primaire (P) et la partie secondaire (S) forment chacune une surface en anneau de cercle radiale portant la denture frontale (Z1, Z2), **en ce que** la partie primaire (P) et la partie secondaire (S) forment chacune, en raccordement à la face en anneau de cercle (en Z1, en Z2), radialement intérieurement, un évidement (46, 47) sensiblement à forme cylindrique à section transversale circulaire, **en ce que** les faces ouvertes des deux évidements (46, 47) cylindriques à section transversales circulaires sont tournées l'une vers l'autre, et **en ce que** les deux évidements (46, 47) cylindriques à section transversale circulaire logent conjointement la bague de commande (R).

4. Accoudoir selon l'une des revendications 1 à 3, **caractérisé en ce que** l'évidement d'entraînement (45) de la bague de commande (R) présente une circonférence plus grande que la came formant organe d'entraînement (44) de la partie primaire (P), **en ce que** la partie primaire (P), tant à la position abaissée et au commencement du pivotement de levée, qu'également à la position levée et au commencement du pivotement de descente du corps d'accoudoir (17), reçoit une avance jusqu'à la mise en butée de la came formant organe d'entraînement (44), sur la première (49) ou deuxième (50) face de butée respective de l'évidement d'entraînement (46).

5. Accoudoir selon l'une des revendications 2 à 4, **caractérisé en ce qu'**à la au moins une came de commande (42) est associé un évidement de commande (48) ménagé dans la piste de commande (43), tournée vers la partie primaire (P), de la partie secondaire (S), et **en ce que** la piste de commande (43) forme une face en anneau de cercle plane, s'étendant radialement par rapport à l'axe (12).

6. Accoudoir selon la revendication 5, **caractérisé en ce qu'**une face étagée, en forme d'anneau de cercle, de l'évidement (47), cylindrique à section transversale circulaire, recevant la bague de commande (R), de la partie secondaire (S), constitue la piste de commande (43) formant une face en anneau de cercle plane.

7. Accoudoir selon la revendication 5 ou selon la revendication 6, **caractérisé en ce que** la au moins une came de commande (42) de la bague de commande (R) glisse, en sortant de l'évidement de commande (48) et en passant sur la piste de commande (43) plane, dès que la came formant organe d'entraînement (44) de la partie primaire (P), lors du pivotement de levée, vient se placer contre la première face de butée (48) de l'évidement d'entraînement (45) de la bague de commande (R), et **en ce que** la au moins une came de commande (42), lors du pivotement de levée progressant, reste sur la piste de commande (43) en forme d'anneau de cercle, jusqu'à la position dressée du corps d'accoudoir (17).

8. Accoudoir selon l'une des revendications 1 à 7, **caractérisé en ce que** la partie de contre-appui (W) est disposée sur l'axe (12) de façon assujettie en rotation, de manière au moins limitée, et **en ce que** la partie secondaire (S) et la partie de contre-appui (W) sont couplées ou reliées ensemble de façon assujettie en rotation.

9. Accoudoir selon la revendication 8, **caractérisé en ce que** la partie secondaire (S) et la partie de contre-appui (W) forment chaque fois deux griffes d'accouplement (29, 30) s'étendant axialement et s'engageant les unes dans les autres, en étant tournées les unes vers les autres par leurs zones d'extrémités libres, les griffes d'accouplement constituant la liaison assujettie en rotation entre la partie secondaire (S) déplaçable axialement et la partie de contre-appui (W), montée à rotation sur l'axe (12) et assurée axialement.

10. Accoudoir selon la revendication 9, **caractérisé en ce que** chaque griffe d'accouplement (29, 30) et chaque creusement (31), disposé entre les pieds de deux griffes d'accouplement (29, 29 ; 30, 30) voisines, de la partie secondaire (S) et (32) de la partie de contre-appui (W), forment respectivement un trou borgne (33) pour recevoir de part et d'autre respectivement quatre ressorts de compression hélicoïdaux (34) répartis périphériquement et s'étendant parallèlement à l'axe (12).

11. Accoudoir selon l'une des revendications 1 à 9, **caractérisé en ce qu'**entre la partie secondaire (S) et la partie de contre-appui (W) est prévu un ressort de compression hélicoïdal unique, disposé coaxialement par rapport aux composants (S, W) cités en dernier.

12. Accoudoir selon la revendication 11, **caractérisé en ce que** le ressort de compression hélicoïdal prend appui sur des épaulements annulaires de la surface d'enveloppe extérieure respective, tant de la partie secondaire (S), qu'également de la partie de contre-appui (W).

13. Accoudoir selon l'une des revendications 8 à 12, **caractérisé en ce que** la partie de contre-appui est un composant d'une sécurité de surcharge, libérant un pivotement de descente du corps d'accoudoir se trouvant à sa position abaissée.

14. Accoudoir selon la revendication 13, **caractérisé en ce que**, sur le côté opposé à la partie secondaire (S), de la partie de contre-appui (W), est disposée, de façon assujettie en rotation sur l'axe (12) et déplaçable axialement, une partie de pressage (D), prenant appui avec une force élastique de rappel (T) contre la partie de contre-appui (W), **en ce que** la partie de contre-appui (W) et la partie de pressage (D) présentent chacune deux saillies (36, 37), s'étendant axialement et tournées les unes vers les autres par leurs zones d'extrémités libres, et s'engageant les unes dans les autres, et **en ce que** les saillies (36), du genre de griffes d'accouplement, de la partie de contre-appui (W) et celles (37) de la partie de pressage (D) sont en appui les unes sur les autres par rapport à un pivotement de levée (A) du corps d'accoudoir (17), avec des faces de butée (38, 39) s'étendant axialement et radialement, et par rapport à un pivotement de descente (N) du corps d'accoudoir (17), avec des faces de glissement (40, 41) obliques, s'étendant obliquement par rapport à l'axe (12).

15. Accoudoir selon la revendication 14, **caractérisé en ce que** l'axe (12) supporte la partie de pressage (D) de façon déplaçable axialement, sur une zone d'axe (53) cylindrique à section transversale non ronde, et **en ce que** la forme de section transversale du logement (35) cylindrique à section transversale non ronde, de la partie de pressage (D), correspond à la forme de section transversale de la zone d'axe (53) cylindrique à section transversale non ronde.

16. Accoudoir selon la revendication 15, **caractérisé** chaque fois par une section transversale à quatre pans, de la zone d'axe (53) cylindrique à section transversale non ronde, et du logement (35) cylindrique à section transversale non ronde, de la partie de pressage (D).

17. Accoudoir selon la revendication 15 ou selon la revendication 16, **caractérisé en ce que** la force de rappel élastique, sollicitant la partie de pressage (D) dans la direction de la partie de contre-appui (W), est formée par un paquet de ressorts à disque (T).

18. Accoudoir selon les revendications 1 à 17, **caractérisé par** un tube enveloppe (14) entourant coaxialement un verrou unidirectionnel à rochets (P, S), un dispositif de commande (R, 43) et une sécurité de surcharge (W, D, T, D).

19. Accoudoir selon la revendication 18, **caractérisé en ce que** le tube enveloppe (14) forme une liaison assujettie en rotation entre deux zones d'extrémité (17, 18) du corps d'accoudoir.

20. Accoudoir selon l'une des revendications 1 à 19, **caractérisé en ce que** l'axe (12) présente, sur la totalité de sa longueur axiale, un profil cannelé, sachant que, sur l'axe (12), la partie primaire (P), la bague de commande (R), la partie secondaire (S) et la partie de contre-appui (W), sont montées avec possibilité de rotation avec chaque fois un perçage traversant (24, 54, 26, 27) central, lisse, tandis qu'au moins une partie de pressage (D) est disposée de façon assujettie en rotation sur l'axe (12), à l'aide d'un logement (35) central, profilé de façon correspondant au profil ondulé.

21. Accoudoir selon la revendication 20, **caractérisé en ce que** l'axe (12) présente au moins un logement disposé sur sa périphérie, tel que, par exemple, une gorge annulaire (24) pour la fixation d'un élément de sécurité axial, tel que, par exemple, un circlip (28).

22. Accoudoir selon la revendication 20 ou selon la revendication 21, **caractérisé en ce que**, dans la direction de pivotement de levée (A) de chaque came de commande (42), en suivant l'évidement de commande (48) respectif, en sortant de la piste de commande (43) plane, en direction axiale (x) par rapport à la bague de commande (R) fait saillie un bossage faisant office d'arbre de commutation (55), contre lequel vient se placer la came de commande (42) lors de sa rotation dans le sens de pivotement de descente (N).

23. Accoudoir selon la revendication 22, **caractérisé en ce que** l'arbre de commutation (55) est disposé directement à côté de l'évidement de commande (48) lui étant associé.
